# EUROPEAN PATENT APPLICATION

(11) **EP 4 578 587 A1**
(43) Date of publication of application: **02.07.2025**
(21) Application number: 23871361.4
(22) Date of filing: 06.07.2023
(51) Int. Cl.: B23K 20/12

(54) **FRICTION STIR WELDING METHOD**

(30) Priority: 30.09.2022 JP 2022158433
(71) Applicant: Nippon Light Metal Company, Ltd., Tokyo 105-0004 (JP)
(72) Inventor: SEO, Nobushiro, Shizuoka-shi, Shizuoka 421-3203 (JP); KOIZUMI, Shingo, Shizuoka-shi, Shizuoka 421-3203 (JP); KUMAI, Masaaki, Kaizuka-shi, Osaka 597-0092 (JP); KIKU, Kazuo, Kaizuka-shi, Osaka 597-0092 (JP)
(74) Representative: Kiwit, Benedikt
(86) International application number: PCT/JP2023/025070
(87) International publication number: WO 2024/070117

(57) **Abstract**

The present invention is characterized in that it comprises a joining step of joining joined members by moving a rotating tool (F) along a movement route set on the joined members, the movement route is set up to include a first movement route along which the rotating tool (F) is moved to friction-stir the joined members and thereby form a plasticized region, and a second movement route along which the rotating tool (F) is moved in a state where the rotating tool (F) is inserted from a same side as in the first movement route to friction-stir the joined members and thereby plastically re-fluidize a portion of the plasticized region (W (Wa)) formed in the first movement route, and an insertion depth of the rotating tool (F) during the plastic re-fluidization by the rotating tool (F) in the second movement route is greater than an insertion depth of the rotating tool (F) during the formation of the plasticized region (W (Wa)) in the first movement route.

## Description

### TECHNICAL FIELD

The present invention relates to a friction stir welding method.

### BACKGROUND ART

When the movement path of a rotating tool has a closed shape or when friction stir welding is performed on joined members with complicated shapes, part of the movement route of the rotating tool may be given an overlap to form plasticized regions partly overlapping each other (see Patent Literature 1).

In friction stir welding, the insertion depth of the rotating tool is usually maintained constant in order to provide uniform joining and prevent formation of defects and burrs. In the case where part of the movement route of the rotating tool is given an overlap as in Patent Literature 1 too, the friction stir welding is performed with the insertion depth of the rotating tool maintained constant at the joining portion.

### CITATION LIST

### Patent Literature

Patent Literature 1: JP2010-203395A

### SUMMARY OF INVENTION

### Technical Problem

Note that inserting a rotating tool into joined members and performing friction stir welding forms a groove along the path of movement of the rotating tool. That is, the material is thinner in the path along which the rotating tool has been moved once. For this reason, when friction stir welding is repeated along the movement route of the rotating tool with the same insertion depth of the rotating tool, the rotating tool takes in less material in the second friction stir welding. This results in a problem that defects are more likely to be formed in the front surfaces of the joined members after the friction stir welding.

In view of the above, an object of the present invention is to provide a friction stir welding method that prevents formation of defects in the front surface of joined members even when the movement route of the rotating tool has an overlap.

### Solution to Problem

The present invention to solve the problem provides a method for performing friction stir welding on joined members with a rotating tool, characterized in that the method comprises a joining step of joining the joined members by moving the rotating tool along a movement route set on the joined members, the movement route is set up to include a first movement route along which the rotating tool is moved to friction-stir the joined members and thereby form a plasticized region, and a second movement route along which the rotating tool is moved in a state where the rotating tool is inserted from a same side as in the first movement route to friction-stir the joined members and thereby plastically re-fluidize a portion of the plasticized region formed in the first movement route, and an insertion depth of the rotating tool during the plastic re-fluidization by the rotating tool in the second movement route is greater than an insertion depth of the rotating tool during the formation of the plasticized region in the first movement route.

Preferably, a position of a rotation axis of the rotating tool in the second movement route is displaced from a position of the rotation axis in the first movement route in a left-right direction with respect to a direction of travel of the rotating tool.

Preferably, D1 × 1.05 < D2 < D1 × 1.25 is satisfied, where D2 is an insertion depth of the rotating tool in the second movement route, and D1 is an insertion depth of the rotating tool in the first movement route.

Preferably, after the rotating tool passes through the first movement route, the rotating tool passes through the second movement route in a same direction as a direction of travel of the rotating tool in the first movement route.

Preferably, after the rotating tool passes through the first movement route, the rotating tool passes through the second movement route in an opposite direction from a direction of travel of the rotating tool in the first movement route.

Preferably, after the rotating tool passes through the first movement route, the rotating tool passes through the second movement route so as to cross a direction of travel of the rotating tool in the first movement route.

Preferably, in the joining step, an overlaying portion formed by laying the joined members one on top of the other is joined, and a position of a distal end of the rotating tool in the second movement route is lower than the overlaying portion.

Preferably, the joined members include a first joined member that has an opening portion and a second joined member that seals the opening portion, the first joined member has a bottom part, a peripheral wall part rising from the bottom part and including the opening portion, a first step portion having a first step bottom surface and a first step side surface rising from the first step bottom surface, and provided at an inner peripheral edge of an end surface of the peripheral wall part, and a first bottom surface continuous with the first step bottom surface and present at substantially a same height position as the first step bottom surface, the friction stir welding method further comprises a placement step of placing the second joined member on the first step bottom surface and the first bottom surface to lay the first bottom surface and a back surface of the second joined member one on top of the other, thereby forming an overlaying portion, and also to butt the first step side surface and a side surface of the second joined member against each other, thereby forming a first butting portion, the joining step involves the first movement route along which the rotating tool is moved to friction-stir at least the second joined member at the overlaying portion and thereby form a plasticized region, a third movement route along which the rotating tool is moved to friction-stir the first joined member and the second joined member at the first butting portion, and the second movement route along which the rotating tool is moved in a state where the rotating tool is inserted from the same side as in the first movement route to friction-stir the first joined member and the second joined member at the overlaying portion and thereby plastically re-fluidize a portion of the plasticized region formed in the first movement route, and the joining step includes moving the rotating tool along the first movement route, the third movement route, and the second movement route in this order to thereby join the first joined member and the second joined member to each other.

Preferably, in the joining step, the rotating tool contacts only the second joined member during joining in the first movement route.

Preferably, in the joining step, a position of a distal end of the rotating tool is at a same height as the first step bottom surface in the third movement route, and the position of the distal end of the rotating tool is lower than the first bottom surface in the second movement route.

Preferably, the first joined member has a second step portion having a second step bottom surface continuous with the first step bottom surface and present at substantially a same height position as the first step bottom surface, and a second step side surface rising from the second step bottom surface, and a third step portion having a third step bottom surface continuous with the first step bottom surface and present at substantially a same height position as the first step bottom surface, and a third step side surface rising from the third step bottom surface, in the placement step, the second joined member is placed on the first step bottom surface, the second step bottom surface, the third step bottom surface, and the first bottom surface to but the second step side surface and a side surface of the second joined member against each other, thereby forming a second butting portion, and also to butt the third step side surface and a side surface of the second joined member against each other, thereby forming a third butting portion, the joining step involves a fourth movement route along which the rotating tool is moved to friction-stir the first joined member and the second joined member at the second butting portion, and a fifth movement route along which the rotating tool is moved to friction-stir the first joined member and the second joined member at the third butting portion, and the joining step includes moving the rotating tool along the fourth movement route, the first movement route, the third movement route, the second movement route, and the fifth movement route in this order to thereby join the first joined member and the second joined member to each other.

Preferably, in the joining step, a position of a distal end of the rotating tool is at a same height as the first step bottom surface in the third movement route, the position of the distal end of the rotating tool is at a same height as the second step bottom surface in the fourth movement route, the position of the distal end of the rotating tool is at a same height as the third step bottom surface in the fifth movement route, and the position of the distal end of the rotating tool is lower than the first bottom surface in the second movement route.

Preferably, when the rotating tool moves from the fourth movement route to the first movement route, an insertion depth of the rotating tool is made shorter while the rotating tool is moved.

Preferably, a thickness of the second joined member is made greater than a height dimension of the first step side surface.

Preferably, in the third movement route, friction stir welding is performed on the first joined member and the second joined member with a rotation axis of the rotating tool slightly shifted toward the second joined member from the first butting portion.

Preferably, the first joined member is formed of a first aluminum alloy, and the second joined member is formed of a second aluminum alloy, and the first aluminum alloy is a kind of material with a higher hardness than the second aluminum alloy.

Preferably, the rotating tool includes a shoulder part and a stirring pin extending downward from a center of a lower end surface of the shoulder part, and in the joining step, friction stir welding is performed with the lower end surface of the shoulder part in contact with front surfaces of the joined members.

Preferably, the rotating tool includes a base part and a stirring pin extending downward from a center of a lower end surface of the base part, and in the joining step, friction stir welding is performed with the base part separated from the joined members and with only the stirring pin in contact with the joined members.

Preferably, the rotating tool has a base part, and a stirring pin provided on the base part, the stirring pin includes a proximal end-side pin continuous with the base part, and a distal end-side pin continuous with the proximal end-side pin, a taper angle of the proximal end-side pin is larger than a taper angle of the distal end-side pin, and a staircase-shaped pin step portion is formed in an outer peripheral surface of the proximal end-side pin, and in the joining step, friction stir welding is performed with the outer peripheral surface of the proximal end-side pin in contact with front surfaces of the joined members.

### Advantageous Effects of Invention

With the friction stir welding method according to the present invention, it is possible to prevent formation of defects in the front surface of joined members even when the movement route of the rotating tool has an overlap.

### BRIEF DESCRIPTION OF DRAWINGS

FIG. 1 is an exploded perspective view showing a joined body according to the first embodiment of the present invention.
FIG. 2 is a perspective view showing a placement step in a friction stir welding method according to the first embodiment.
FIG. 3 is a cross-sectional view as seen in the direction of the arrows on the line III-III in FIG. 2.
FIG. 4 is a cross-sectional view as seen in the direction of the arrows on the line IV-IV in FIG. 2.
FIG. 5 is a cross-sectional view as seen in the direction of the arrows on the line V-V in FIG. 2.
FIG. 6 is a cross-sectional view as seen in the direction of the arrows on the line VI-VI in FIG. 2.
FIG. 7 is a cross-sectional view as seen in the direction of the arrows on the line VII-VII in FIG. 2.
FIG. 8 is a cross-sectional view as seen in the direction of the arrows on the line VIII-VIII in FIG. 2.
FIG. 9 is a cross-sectional view as seen in the direction of the arrows on the line IX-IX in FIG. 2.
FIG. 10 is a side view showing a rotating tool according to the first embodiment.
FIG. 11 is a general schematic view showing movement routes in the friction stir welding method according to the first embodiment.
FIG. 12 is a cross-sectional view of a joining step in the friction stir welding method according to the first embodiment as seen in the direction of the arrows on the line XII-XII in FIG. 11.
FIG. 13 is an enlarged schematic view showing a fourth movement route in the friction stir welding method according to the first embodiment.
FIG. 14 is a cross-sectional view of the joining step in the friction stir welding method according to the first embodiment as seen in the direction of the arrows on the line XIV-XIV in FIG. 11.
FIG. 15 is a cross-sectional view of the joining step in the friction stir welding method according to the first embodiment as seen in the direction of the arrows on the line XV-XV in FIG. 11.
FIG. 16 is an enlarged schematic view showing a third movement route in the friction stir welding method according to the first embodiment.
FIG. 17 is a cross-sectional view of the joining step in the friction stir welding method according to the first embodiment as seen in the direction of the arrows on the line XVII-XVII in FIG. 16.
FIG. 18 is an enlarged schematic view showing a fifth movement route in the friction stir welding method according to the first embodiment.
FIG. 19 is a cross-sectional view of the joining step in the friction stir welding method according to the first embodiment as seen in the direction of the arrows on the line XIX-XIX in FIG. 18.
FIG. 20 is an exploded perspective view showing a joined body according to a second embodiment of the present invention.
FIG. 21 is a perspective view showing a placement step in a friction stir welding method according to the second embodiment.
FIG. 22 is a cross-sectional view as seen in the direction of the arrows on the line XXII-XXII in FIG. 21.
FIG. 23 is a cross-sectional view as seen in the direction of the arrows on the line XXIII-XXIII in FIG. 21.
FIG. 24 is a general schematic view showing movement routes in the friction stir welding method according to the second embodiment.
FIG. 25 is a cross-sectional view of a joining step in the friction stir welding method according to the second embodiment as seen in the direction of the arrows on the line XXV-XXV in FIG. 24.
FIG. 26 is a cross-sectional view of the joining step in the friction stir welding method according to the second embodiment as seen in the direction of the arrows on the line XXVI-XXVI in FIG. 24.
FIG. 27 is a cross-sectional view of the joining step in the friction stir welding method according to the second embodiment as seen in the direction of the arrows on the line XXVII-XXVII in FIG. 24.
FIG. 28 is an exploded perspective view showing a joined body according to a third embodiment of the present invention.
FIG. 29 is a perspective view showing a placement step in a friction stir welding method according to the third embodiment.
FIG. 30 is a cross-sectional view of a joining step in the friction stir welding method according to the third embodiment as seen in the direction of the arrows on the line XXX-XXX in FIG. 29.
FIG. 31 is a cross-sectional view of the joining step in the friction stir welding method according to the third embodiment as seen in the direction of the arrows on the line XXXI-XXXI in FIG. 29.
FIG. 32 is a side view showing a rotating tool according to a first modified example.
FIG. 33 is a side view showing a rotating tool according to a second modified example.
FIG. 34 is an enlarged side view showing the rotating tool according to the second modified example.

### DESCRIPTION OF EMBODIMENTS

Embodiments of the present invention will be described with reference to the drawings as appropriate. The present invention is not limited to the following embodiments. Some or all of the components in the embodiments and modified examples can be combined as appropriate. The directions are to be used for convenient of description and are not intended to limit the present invention.

### [1. First Embodiment]

### [1-1. Joined Members and Joined Body]

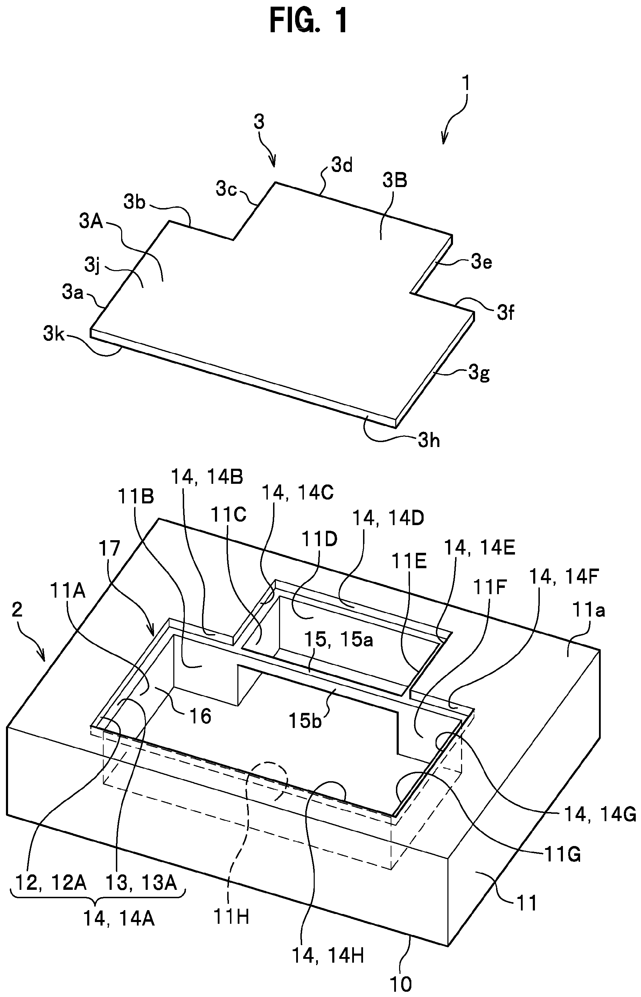

For a friction stir welding method according to a first embodiment of the present invention, a case of forming a liquid-cooling jacket (joined body) 1 will be exemplarily presented, as shown in FIG. 1. The liquid-cooling jacket 1 includes a jacket main body (first joined member) 2 and a sealing body (second joined member) 3. The liquid-cooling jacket 1 is a device in which a fluid is caused to flow to cool an installed heat-generating body. The jacket main body 2 and the sealing body 3 are integrated with each other by friction stir welding. The term "front surface" in the following description means a surface on the opposite side from a "back surface".

The jacket main body (first joined member) 2 includes a bottom part 10, a peripheral wall part 11, and a crossbar part 15. The jacket main body 2 is not particularly limited as long as it is made of a metal that can be friction-stirred, and is formed mainly of a first aluminum alloy in the present embodiment. For example, an aluminum alloy casting material such as JIS H5302 ADC12 (Al-Si-Cu-based) is used as the first aluminum alloy.

The bottom part 10 is a plate-shaped member having a rectangular shape. The peripheral wall part 11 is a wall rising in a frame shape from a peripheral edge portion of the bottom part 10. A recess portion 16 is formed as a hollow portion on the inside of the bottom part 10 and the peripheral wall part 11, and also an opening portion 17 opening on the upper side is formed. The inside of the peripheral wall part 11 is formed by inner side surfaces 11A, 11B, 11C, 11D, 11E, 11F, 11G, and 11H each rising perpendicularly from the bottom part 10.

The inner side surface 11A is parallel to and faces the inner side surface 11G, and is perpendicular to the inner side surfaces 11B and 11H extending from opposite ends of the inner side surface 11A.

The inner side surface 11B is parallel to and faces the inner side surface 11H, and is perpendicular to the inner side surfaces 11A and 11C extending from opposite ends of the inner side surface 11B.

The inner side surface 11C is parallel to and faces the inner side surface 11E, and is perpendicular to the inner side surfaces 11B and 11D extending from opposite ends of the inner side surface 11C.

The inner side surface 11D is parallel to and faces the inner side surface 11H, and is perpendicular to the inner side surfaces 11C and 11E extending from opposite ends of the inner side surface 11D.

The inner side surface 11E is parallel to and faces the inner side surface 11C, and is perpendicular to the inner side surfaces 11D and 11F extending from opposite ends of the inner side surface 11E.

The inner side surface 11F is parallel to and faces the inner side surface 11H, and is perpendicular to the inner side surfaces 11E and 11G extending from opposite ends of the inner side surface 11F.

The inner side surface 11G is parallel to and faces the inner side surface 11A, and is perpendicular to the inner side surfaces 11F and 11H extending from opposite ends of the inner side surface 11G.

The inner side surface 11H is parallel to and faces the inner side surface 11D, and is perpendicular to the inner side surfaces 11A and 11G extending from opposite ends of the inner side surface 11H.

Also, the inner side surface 11B and the inner side surface 11F are formed to be coplanar with each other. The inner side surfaces 11A, 11B, and 11C have a crank shape in a plan view. Also, the inner side surfaces 11E, 11F, and 11G have a crank shape in a plan view.

The crossbar part 15 is formed so as to lie between the inner side surface 11C and the inner side surface 11E. The crossbar part 15 is a plate-shaped part with a rectangular cross section. A front surface (first bottom surface) 15a of the crossbar part 15 is continuous and flush with a step bottom surface 12 to be described later. A side surface 15b of the crossbar part 15 is flush with each of the inner side surfaces 11B and 11F. Providing the crossbar part 15 partitions the recess portion 16 into a small hollow portion on the front side (one side) and a large hollow portion on the rear side (the other side).

A step portion 14 is formed over the entirety of an inner peripheral edge of the peripheral wall part 11 in the circumferential direction. The step portion 14 is formed of the step bottom surface 12 and a step side surface 13 rising from the step bottom surface 12. Portions of the step bottom surface 12, the step side surface 13, and the step portion 14 corresponding to the inner side surfaces 11A to 11H will be distinguished by denoting them with different reference signs. While each step portion will be described in detail later, a second step portion 14A as a portion corresponding to the inner side surface 11A, for example, is formed of a second step bottom surface 12A and a second step side surface 13A, as shown in FIG. 1.

Note that, while the width dimension of each step bottom surface may be set as appropriate, the widths of all step bottom surfaces are set to be the same in the present embodiment. Also, while the height position of each step bottom surface may be set as appropriate, the height positions of all step bottom surfaces are set to be the same in the present embodiment. Also, while the height dimension of each step side surface may be set as appropriate, the height dimensions of all step side surfaces are set to be the same in the present embodiment. Also, while the jacket main body 2 in the present embodiment is formed as a single body, the peripheral wall part 11 may be separated components and joined with a sealing member into an integrated body, for example.

The sealing body (second joined member) 3 is a plate-shaped member that seals the opening portion 17 of the jacket main body 2. The sealing body 3 includes a large plate portion 3A which is a large portion, and a small plate portion 3B which is a portion smaller than the large plate portion 3A. The large plate portion 3A is a portion that covers the crossbar part 15 and the inner side surfaces 11A, 11B, 11F, 11G, and 11H. The small plate portion 3B is a portion that covers the inner side surfaces 11C, 11D, and 11E. The sealing body 3 has substantially the same shape as the outer edge of the step portion 14 so as to be disposed on the step portion 14 with substantially no gap therebetween. The sealing body 3 includes a front surface 3j, a back surface 3k, and side surfaces 3a to 3h.

The sealing body 3 is not particularly limited as long as it is made of a metal that can be friction-stirred, and is formed mainly of a second aluminum alloy in the present embodiment. The second aluminum alloy is a material with a lower hardness than the first aluminum alloy. The second aluminum alloy is formed of, for example, a wrought product of an aluminum alloy such as JIS A1050, A1070, A1100, or A6063.

### [1-2. Manufacturing Method]

Next, a method for manufacturing the joined body according to the present embodiment (friction stir welding method) will be described. The friction stir welding method according to the present embodiment involves a preparation step, a placement step, and a joining step.

### <Preparation Step>

The preparation step is a step of preparing the jacket main body 2 and the sealing body 3. While the method for manufacturing the jacket main body 2 and the sealing body 3 is not particularly limited, the jacket main body 2 is shaped by die casting, for example. The sealing body 3 is shaped by extrusion, for example.

### <Placement Step>

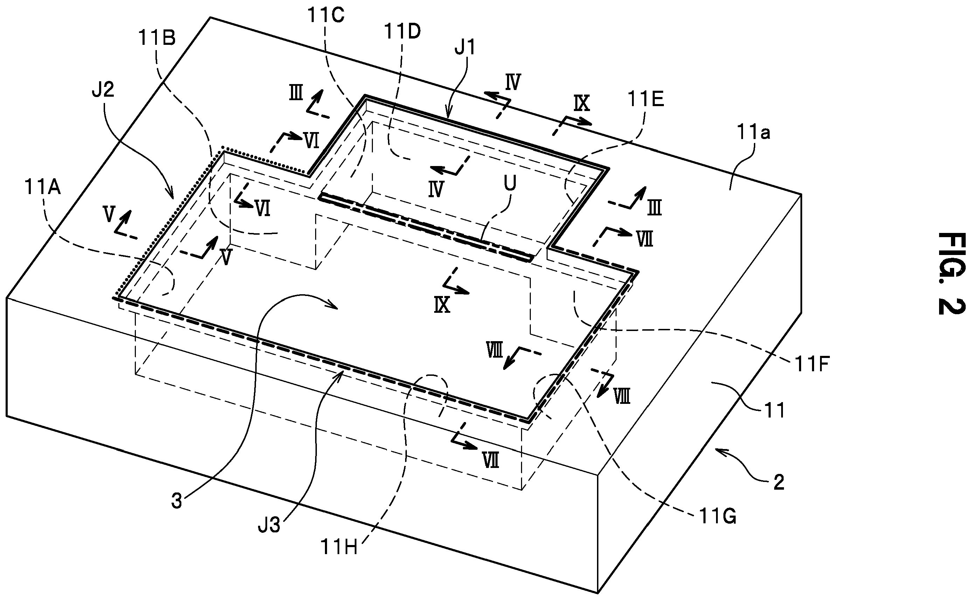

As shown in FIG. 2, the placement step is a step of placing the sealing body 3 on the jacket main body 2 to thereby form butting portions and overlaying portions. In the present embodiment, a first butting and overlaying portion J1, a second butting and overlaying portion J2, a third butting and overlaying portion J3, and a fourth overlaying portion U are formed. The first butting and overlaying portion J1 corresponds to the inner side surfaces 11C, 11D, and 11E, and has a substantially C-shape in a plan view, as indicated by the bold line. The second butting and overlaying portion J2 corresponds to the inner side surfaces 11A and 11B, and has an L-shape in a plan view, as indicated by the dotted line. The third butting and overlaying portion J3 corresponds to the inner side surfaces 11F, 11G, and 11H, and has a substantially horizontally inverted J-shape in a plan view, as indicated by the dashed line. The fourth overlaying portion U has a narrow rectangular shape in a plan view, as indicated by the imaginary line.

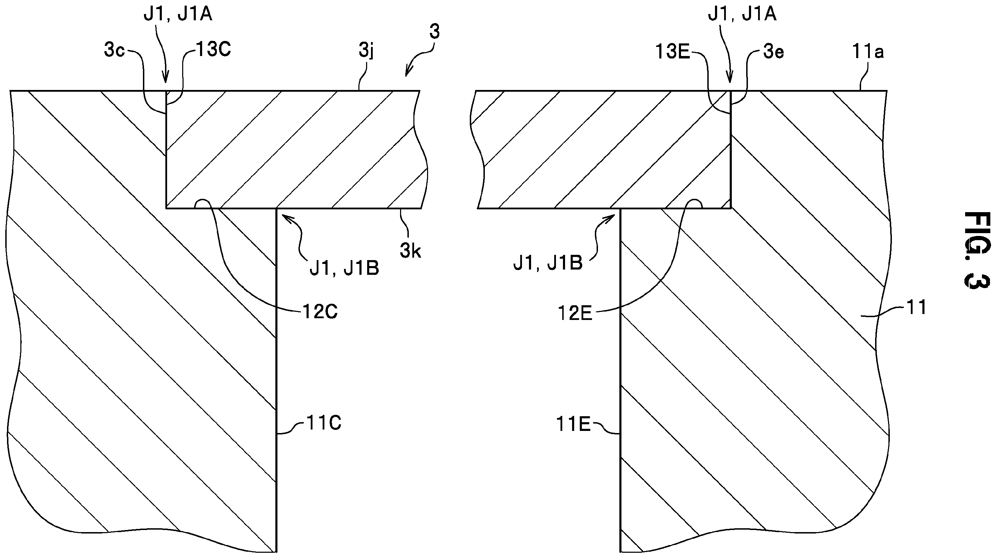

As shown in FIG. 3, the side surface 3e of the sealing body 3 and a first step side surface 13E are butted against each other to form a first butting portion J1A. Also, the back surface 3k of the sealing body 3 and a first step bottom surface 12E are laid one on top of the other to form a first overlaying portion J1B. The front surface 3j of the sealing body 3 and an end surface 11a of the peripheral wall part 11 are flush with each other.

Further, the side surface 3c of the sealing body 3 and a first step side surface 13C are butted against each other to form a first butting portion J1A. Also, the back surface 3k of the sealing body 3 and a first step bottom surface 12C are laid one on top of the other to form a first overlaying portion J1B.

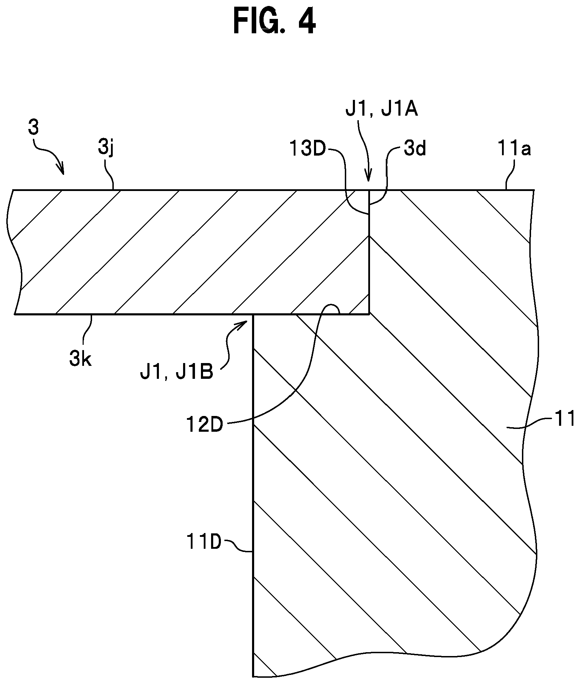

As shown in FIG. 4, the side surface 3d of the sealing body 3 and a first step side surface 13D are butted against each other to form a first butting portion J1A. Also, the back surface 3k of the sealing body 3 and a first step bottom surface 12D are laid one on top of the other to form a first overlaying portion J1B. The three first butting portions J1A and the three first overlaying portions J1B described above form the first butting and overlaying portion J1.

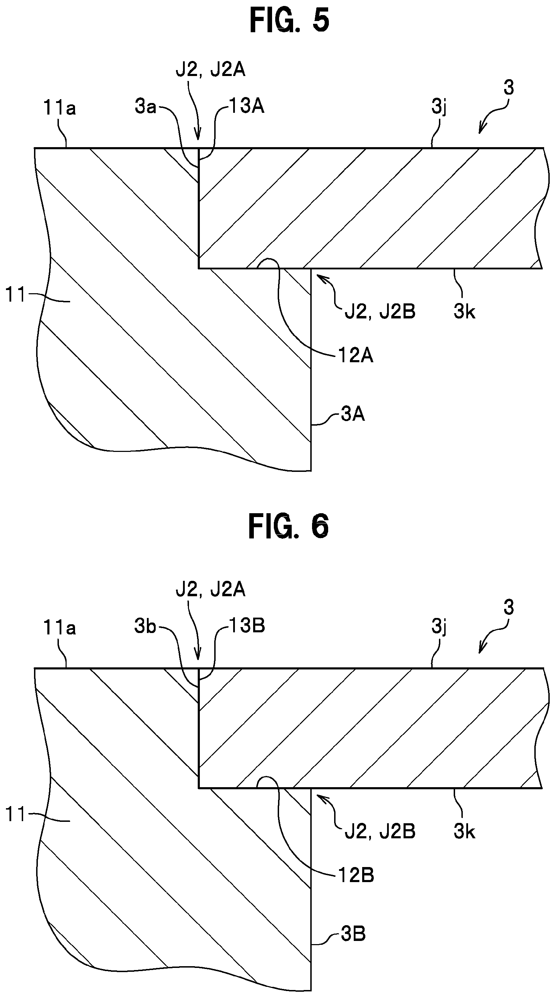

As shown in FIG. 5, the side surface 3a of the sealing body 3 and the second step side surface 13A are butted against each other to form a second butting portion J2A. Also, the back surface 3k of the sealing body 3 and the second step bottom surface 12A are laid one on top of the other to form a second overlaying portion J2B.

As shown in FIG. 6, the side surface 3b of the sealing body 3 and a second step side surface 13B are butted against each other to form a second butting portion J2A. Also, the back surface 3k of the sealing body 3 and a second step bottom surface 12B are laid one on top of the other to form a second overlaying portion J2B. The two second butting portions J2A and the two second overlaying portions J2B described above form the second butting and overlaying portion J2.

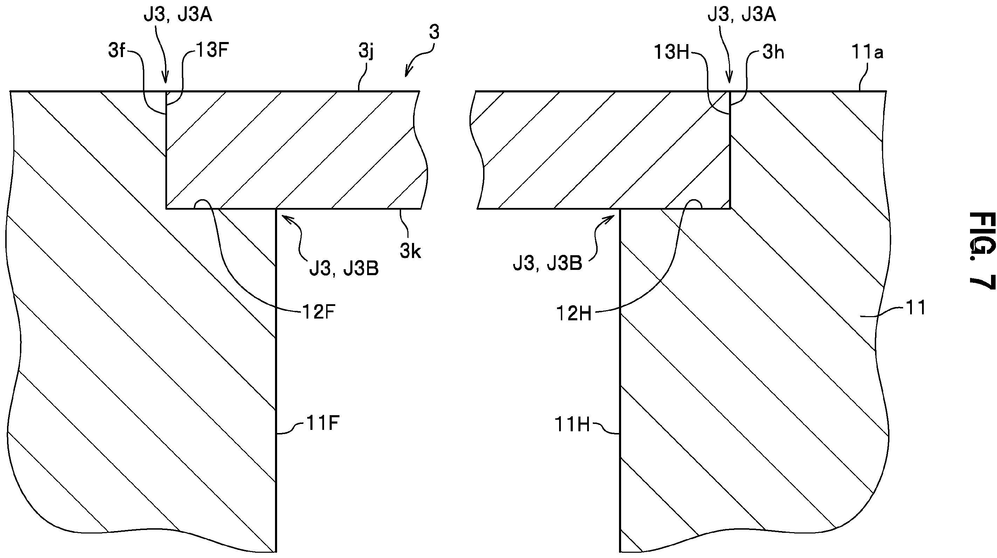

As shown in FIG. 7, the side surface 3f of the sealing body 3 and a third step side surface 13F are butted against each other to form a third butting portion J3A. Also, the back surface 3k of the sealing body 3 and a third step bottom surface 12F are laid one on top of the other to form a third overlaying portion J3B.

Further, the side surface 3h of the sealing body 3 and a third step side surface 13H are butted against each other to form a third butting portion J3A. Also, the back surface 3k of the sealing body 3 and a third step bottom surface 12H are laid one on top of the other to form a third overlaying portion J3B.

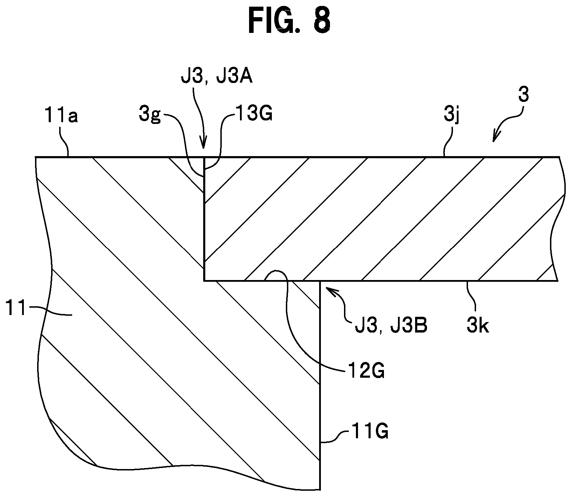

As shown in FIG. 8, the side surface 3g of the sealing body 3 and a third step side surface 13G are butted against each other to form a third butting portion J3A. Also, the back surface 3k of the sealing body 3 and a third step bottom surface 12G are laid one on top of the other to form a third overlaying portion J3B. The three third butting portions J3A and the three third overlaying portions J3B described above form the third butting and overlaying portion J3.

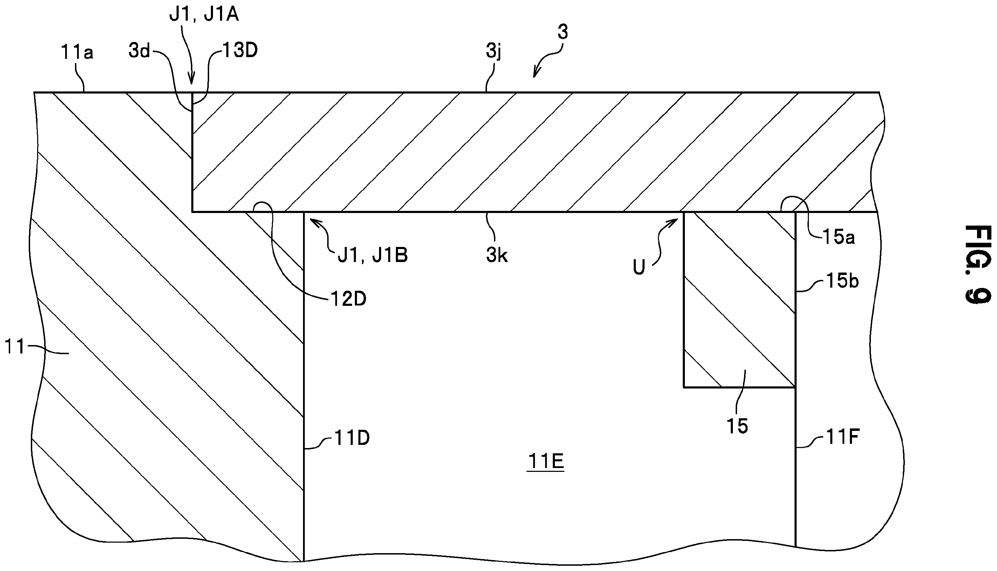

As shown in FIG. 9, the back surface 3k of the sealing body 3 and the front surface (first bottom surface) 15a of the crossbar part 15 are laid one on top of the other to form the fourth overlaying portion U.

### <Rotating Tool>

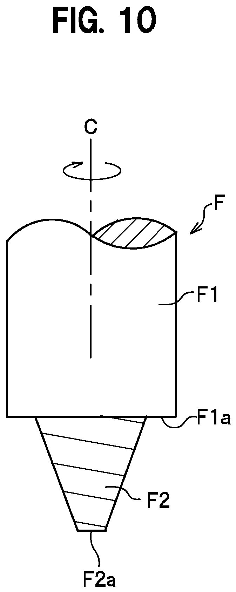

A rotating tool F to be used to manufacture the joined body will now be described. As shown in FIG. 10, the rotating tool F includes a shoulder part F1 and a stirring pin F2. The rotating tool F is formed of tool steel, for example. The shoulder part F1 is a part to be coupled to the output shaft of a joining apparatus (not shown), and has a column shape or a frustum shape. The stirring pin F2 extends downward from the center of a lower end surface F1a of the shoulder part F1. The stirring pin F2 has a truncated cone shape that decreases in diameter from the lower end surface F1a of the shoulder part F1 as a proximal end toward a distal end. The lower end surface F1a may be flat or in a mortar shape recessed upward (a direction away from the stirring pin F2). A distal end F2a of the stirring pin F2 is flat. A helical groove is formed over the entirety of the outer peripheral surface of the stirring pin F2 in the height direction. While the helical groove can be either right-handed or left-handed, it is left-handed (counterclockwise when viewed from above) in the present embodiment.

When the rotating tool F with a left-handed helical groove is rotated clockwise or when the rotating tool F with a right-handed helical groove is rotated counterclockwise, a plastically fluidized material softened by friction stirring is guided by the helical groove to flow toward the distal end of the stirring pin F2. This keeps the plastically fluidized material from overflowing to the outside during the friction stirring and prevent formation of burrs. Also, by performing friction stir welding with the lower end surface F1a of the shoulder part F1 in contact with the joined members, the softened plastically fluidized materials can be held down. This prevents formation of burrs.

### <Joining Step>

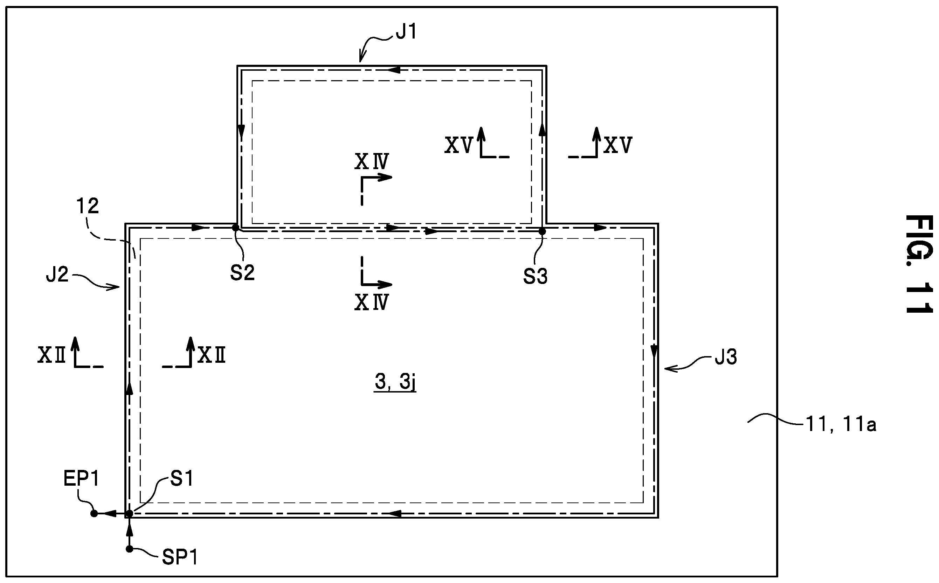

The joining step is a step of performing friction stir welding on the jacket main body 2 and the sealing body 3 with the rotating tool F as shown in FIG. 11. In the joining step, the friction stir welding is performed with the rotating tool F rotated clockwise. In the joining step, as shown in FIG. 11, the friction stir welding is performed continuously by moving the rotating tool F along each butting and overlaying portion and the fourth overlaying portion U without disengaging the rotating tool F partway. In the joining step, the rotating tool F is inserted at a start position SP1 set on the end surface 11a of the peripheral wall part 11, and then moved to an intermediate position S1, from which the rotating tool F performs friction stir welding on the second butting and overlaying portion J2, the fourth overlaying portion U, the first butting and overlaying portion J1, the fourth overlaying portion U, and the third butting and overlaying portion J3 and is disengaged from the peripheral wall part 11 at an end position EP1 set on the end surface 11a of the peripheral wall part 11. In other words, the friction stir welding is performed by moving the rotating tool F in a figure-eight pattern such that the friction stir welding is performed twice on the fourth overlaying portion U, which the rotating tool F passes through multiple times.

Note that the intermediate position S1 is set on the front surface 3j of the sealing body 3 near the position at which the second butting and overlaying portion J2 and the third butting and overlaying portion J3 meet. Also, an intermediate position S2 is set near the position of the joint between the second butting and overlaying portion J2 and the fourth overlaying portion U. Further, an intermediate position S3 is set near the position of the joint between the fourth overlaying portion U and the first butting and overlaying portion J1 (and the third butting and overlaying portion J3).

### <Second Butting and Overlaying Portion J2: Fourth Movement Route L4>

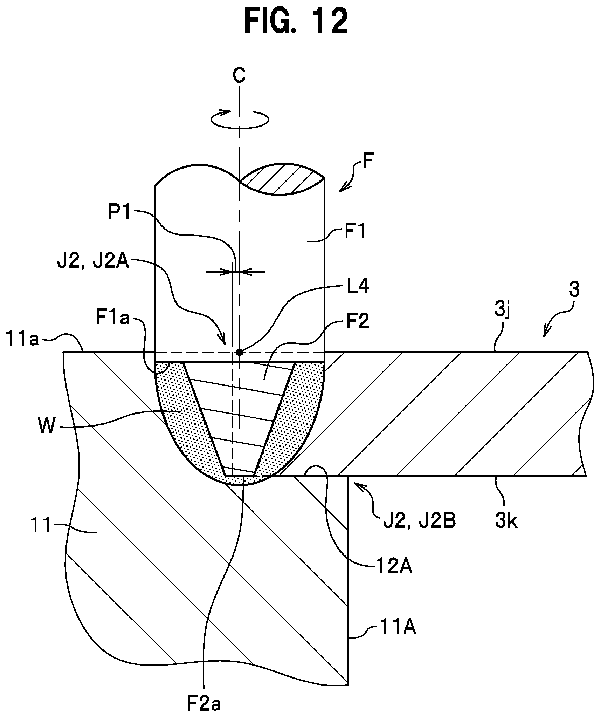

First, the start position SP1 is set on the end surface 11a of the peripheral wall part 11. The start position SP1 may be provided on the front surface 3j of the sealing body 3. After the rotating tool F is inserted at the start position SP1 while being rotated in the forward direction, the rotating tool F is gradually pushed in deeper while it is moved toward the second butting and overlaying portion J2. As shown in FIG. 12, once reaching the second butting and overlaying portion J2, the rotating tool F is inserted to an insertion depth D4 set so as to push the lower end surface F1a of the shoulder part F1 slightly into the end surface 11a of the peripheral wall part 11 and the front surface 3j of the sealing body 3 and set the distal end F2a of the stirring pin F2 at the same height position as the second step bottom surface 12A. The rotating tool F is moved along the second butting and overlaying portion J2 while maintaining this insertion depth D4 to thereby perform friction stir welding on the second butting portions J2A and the second overlaying portions J2B. A plasticized region W is formed in the path of movement of the rotating tool F.

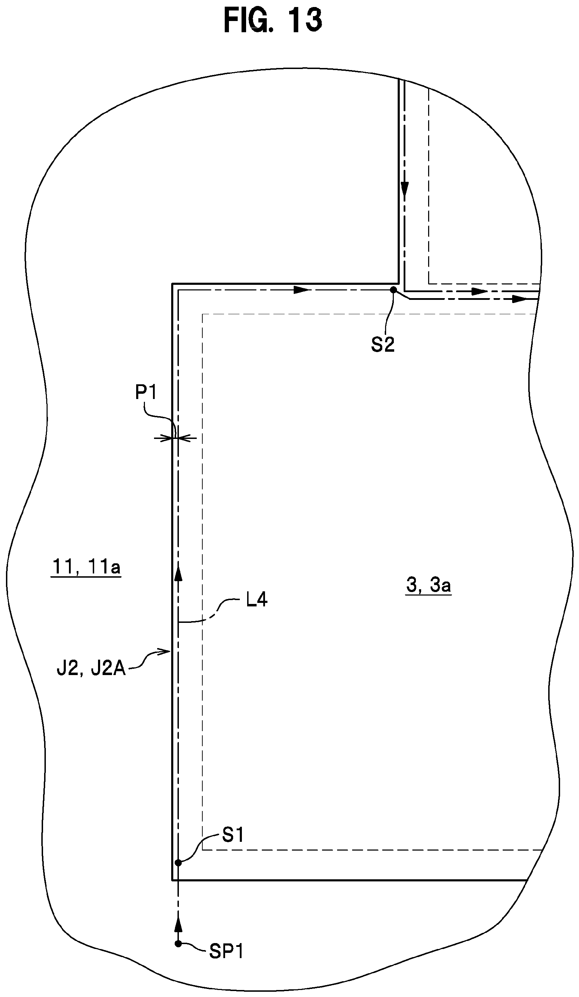

While a rotation axis C of the rotating tool F may be aligned with the second butting portions J2A, the friction stir welding is performed in the present embodiment with the rotation axis C displaced inward (toward the sealing body 3) from the second butting portions J2A. More specifically, as shown in FIG. 13, a fourth movement route L4 which is the movement route of the rotating tool F (the route along which the rotation axis C travels) during the friction stir welding of the second butting and overlaying portion J2 is set at positions that are present along the second butting portions J2A and slightly displaced inward from the second butting portions J2A. An amount of displacement P1 from each second butting portion J2A to the fourth movement route L4 is preferably 0.1 < P1 (mm), more preferably 0.2 < P1 (mm), preferably P1 < 0.5 (mm), and more preferably P1 < 0.4 (mm). Once reaching the intermediate position S2, the rotating tool F proceeds with the first friction stir welding of the fourth overlaying portion U without interruption.

### <Fourth Overlaying Portion U: First Friction Stir Welding: First Movement Route L1>

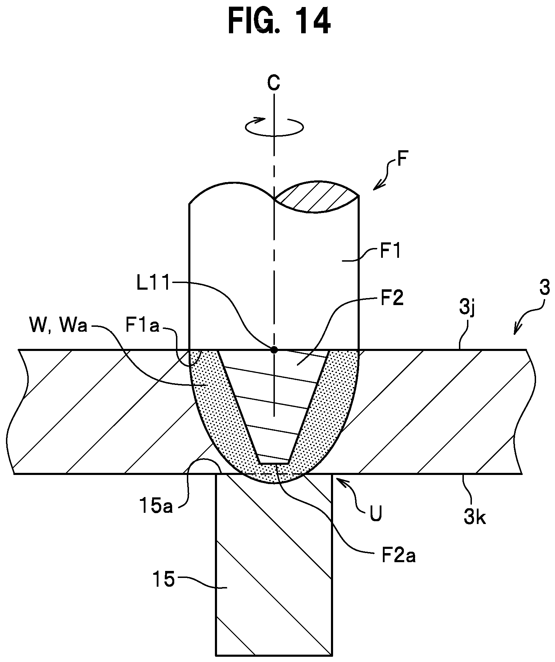

As shown in FIG. 14, in the first friction stir welding of the fourth overlaying portion U, an insertion depth D1 is set so as to bring the lower end surface F1a of the shoulder part F1 into contact with the front surface 3j of the sealing body 3 while keeping the distal end F2a of the stirring pin F2 from reaching the fourth overlaying portion U. Although the distal end F2a of the stirring pin F2 does not reach the front surface 15a of the crossbar part 15, the plasticized region W reaches the front surface 15a, thereby allowing friction stir welding of the fourth overlaying portion U. When proceeding with the friction stir welding of the fourth overlaying portion U from that of the second butting and overlaying portion J2, it is preferable to perform the friction stir welding by gradually making the height position of the rotating tool F higher (shallower) while moving the rotating tool F.

As shown in FIG. 14, a first movement route L1 which is the movement route of the rotating tool F during the first friction stir welding of the fourth overlaying portion U is set substantially at the center of the fourth overlaying portion U in the width direction. After reaching the vicinity of the intermediate position S3 (see FIG. 11), the rotating tool F proceeds with the friction stir welding of the first butting and overlaying portion J1 without interruption.

<First Butting and Overlaying Portion J1: Third Movement Route L3>

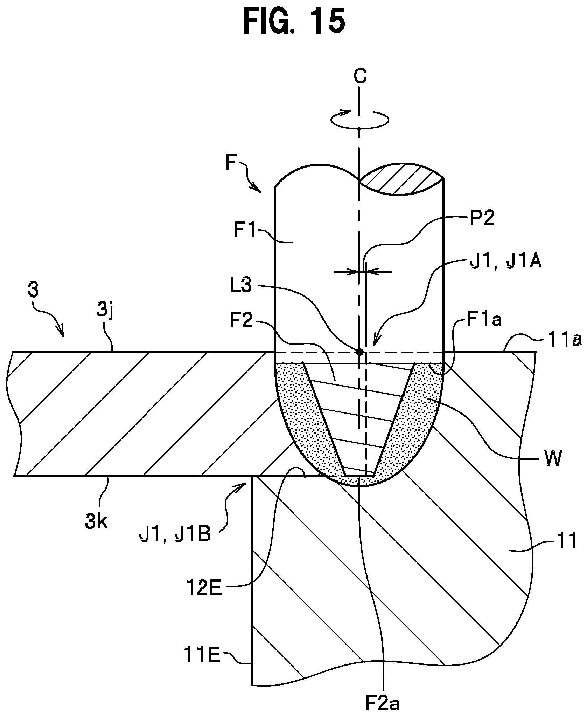

As shown in FIG. 15, once reaching the first butting and overlaying portion J1, the rotating tool F is inserted to an insertion depth D3 set so as to push the lower end surface F1a of the shoulder part F1 slightly into the end surface 11a of the peripheral wall part 11 and the front surface 3j of the sealing body 3 and set the distal end F2a of the stirring pin F2 at the same height position as the first step bottom surface 12E. The rotating tool F is moved along the first butting and overlaying portion J1 while maintaining this insertion depth D3 to thereby perform friction stir welding on the first butting portions J1A and the first overlaying portions J1B. Also, the direction of rotation of the rotating tool F may be reversed during the friction stir welding of the first butting and overlaying portion J1 in order to maintain the shear side and the flow side of the rotating tool F constant between the jacket main body 2 side and the sealing body 3 side.

Note that, if the distal end F2a of the stirring pin F2 is shallower than the first step bottom surface 12E at the intermediate position S3, it may cause defective joining of the first butting and overlaying portion J1. For this reason, it suffices that, when moving from the fourth overlaying portion U to the first butting and overlaying portion J1, the distal end F2a of the stirring pin F2 is set at the same height as the first step bottom surface 12E by the time of reaching the intermediate position S3. For example, when moving from the fourth overlaying portion U to the first butting and overlaying portion J1, it is preferable to perform the friction stir welding by gradually making the height position of the rotating tool Flower (deeper) while moving the rotating tool F.

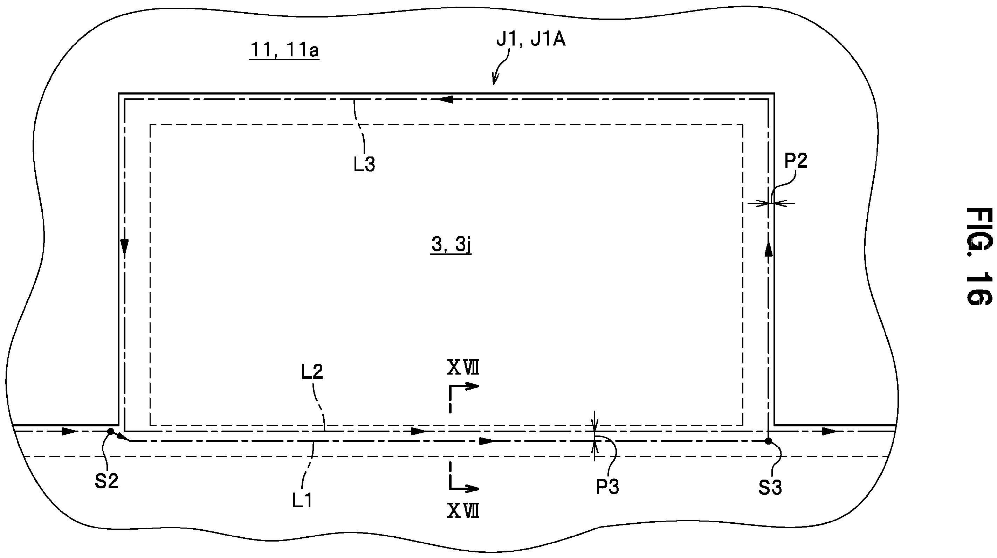

While the rotation axis C of the rotating tool F may be aligned with the first butting portions J1A, the friction stir welding is performed in the present embodiment with the rotation axis C displaced inward (toward the sealing body 3) from the first butting portions J1A. More specifically, as shown in FIG. 16, a third movement route L3 which is the movement route of the rotating tool F during the friction stir welding of the first butting and overlaying portion J1 is set at positions that are present along the first butting portions J1A and slightly displaced inward from the first butting portions J1A. An amount of displacement P2 from the first butting portion J1A to the third movement route L3 is preferably 0.1 < P2 (mm), more preferably 0.2 < P2 (mm), preferably P2 < 0.5 (mm), and more preferably P2 < 0.4 (mm). Once reaching the vicinity of the intermediate position S2, the rotating tool F proceeds with the second friction stir welding of the fourth overlaying portion U without interruption.

### <Fourth Overlaying Portion U: Second Friction Stir Welding: Second Movement Route L2>

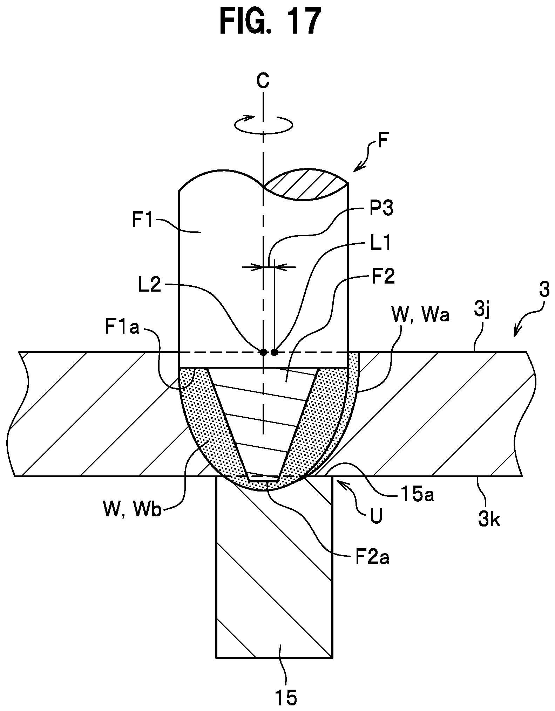

As shown in FIG. 17, in the second friction stir welding of the fourth overlaying portion U, an insertion depth D2 is set so as to push the lower end surface F1a of the shoulder part F1 slightly into the front surface 3j of the sealing body 3 and make the distal end F2a of the stirring pin F2 reach the crossbar part 15 (fourth overlaying portion U). When moving from the first butting and overlaying portion J1 to the fourth overlaying portion U, it is preferable to perform the friction stir welding by gradually making the height position of the rotating tool F lower (deeper) while moving the rotating tool F.

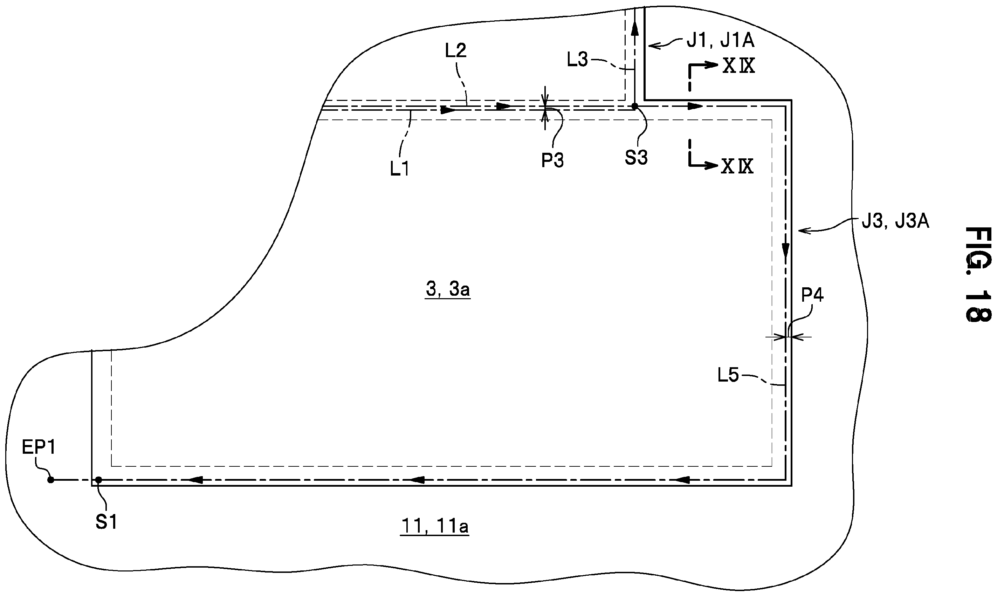

As shown in FIGs. 17 and 18, a second movement route L2 which is the movement route of the rotating tool F during the second friction stir welding of the fourth overlaying portion U is slightly displaced from the first movement route L1 in the left-right direction (left direction in the present case) with respect to the direction of travel of the rotating tool F. Thus, the first plasticized region W (Wa) and the second plasticized region W (Wb) are formed to be slight offset from each other. While an amount of displacement P3 between the first movement route L1 (first friction stir welding) and the second movement route L2 (second friction stir welding) for the fourth overlaying portion U may be set as appropriate, it is preferably 0.1 < P3 (mm), more preferably 0.2 < P3 (mm), further preferably 0.3 < P3 (mm), preferably P3 < 1.2 (mm), more preferably P3 < 1.0 (mm), and further preferably P3 < 0.8 mm.

Also, it is preferable that D1 × 1.05 < D2 < D1 × 1.25, where D2 is the insertion depth of the rotating tool F in the second movement route L2 (second friction stir welding), and D1 is the insertion depth of the rotating tool F in the first movement route L1 (first friction stir welding). The upper limit value is preferably D2 < D1 × 1.25, more preferably D2 < D1 × 1.20, and further preferably D2 < D1 × 1.15. The insertion depths each refer to the distance from the front surface of a joined member (the front surface 3j of the sealing body 3 in the present case) to the distal end F2a of the stirring pin F2. As shown in FIG. 18, after reaching the vicinity of the intermediate position S3, the rotating tool F proceeds with the friction stir welding of the third butting and overlaying portion J3 without interruption.

### <Third Butting and Overlaying Portion J3: Fifth Movement Route L5>

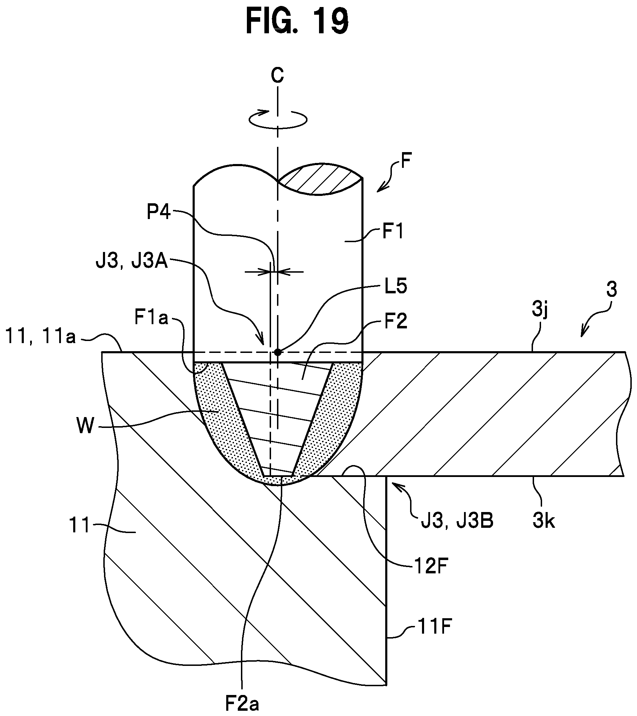

As shown in FIG. 19, once reaching the intermediate position S3, the rotating tool F is inserted to an insertion depth D5 set so as to push the lower end surface F1a of the shoulder part F1 slightly into the end surface 11a of the peripheral wall part 11 and the front surface 3j of the sealing body 3 and set the distal end F2a of the stirring pin F2 at the same height position as the third step bottom surface 12F. The rotating tool F is moved along the third butt overlaying portions J3A while maintaining this insertion depth D5 to thereby perform friction stir welding on the third butting portions J3A and the third overlaying portions J3B. It suffices that, when moving from the fourth overlaying portion U after the second friction stir welding to the third butting and overlaying portion J3, the distal end F2a of the stirring pin F2 is set at the same height as the first step bottom surface 12E by the time the rotating tool F reaches the intermediate position S3, from which the rotating tool F will move to the third butting and overlaying portion J3. For example, it is preferable to perform the friction stir welding by gradually making the height position of the rotating tool F higher (shallower) while moving the rotating tool F.

While the rotation axis C of the rotating tool F may be aligned with the third butting portions J3A, the friction stir welding is performed in the present embodiment with the rotation axis C displaced inward (toward the sealing body 3) from the third butting portions J3A. More specifically, as shown in FIGs. 18 and 19, a fifth movement route L5 which is the movement route of the rotating tool F during the friction stir welding of the third butting and overlaying portion J3 is set at positions that are present along the third butting portions J3A and slightly displaced inward from the third butting portions J3A. An amount of displacement P4 from each third butting portion J3A to the fifth movement route L5 is preferably 0.1 < P4 (mm), more preferably 0.2 < P4 (mm), preferably P4 < 0.5 (mm), and more preferably P4 < 0.4 (mm). Once the rotating tool F reaches the intermediate position S1, the height position of the rotating tool F is gradually raised and the rotating tool F is disengaged from the peripheral wall part 11 at the end position EP1. By the above steps, the jacket main body 2 and the sealing body 3 are integrated by friction stir welding.

### [1-3. Advantageous Effects]

In the friction stir welding according to the present embodiment described above, at the region of the joined members that is plastically fluidized multiple times by the rotating tool F (the fourth overlaying portion U), the insertion depth D2 of the rotating tool F during the second plastic fluidization of the joined members is set to be greater than the insertion depth D1 of the rotating tool F in the first plastic fluidization of the joined members.

In this way, the second friction stir welding is performed taking in the materials in a region of the joined members that have not been plastically fluidized, in particular, the materials in a region in the depth direction of the joined members that have not been plastically fluidized. This compensates the thinning in the material surface by the first friction stirring. As a result, even when the rotating tool F moves along a path along which the joined members are plastically fluidized multiple times, formation of defects in the front surfaces of the joined members will be prevented, thereby allowing fine joining. Also, the flexibility of the movement routes and the flexibility in the designs of the joined members are increased, and also the movement routes are made more efficient, thereby reducing the time required for the joining. Accordingly, the productivity will be improved.

Also, while the first movement route L1 and the second movement route L2 at the fourth overlaying portion U may be at the same position, they are offset from each other in the left-right direction with respect to the direction of travel in the present embodiment. By offsetting the position of the rotating tool F in the first friction stir welding and that in the second friction stir welding from each other in the left-right direction (horizontal direction) with respect to the direction of travel, the materials are not only supplied from the up-down direction but also supplied from the left-right direction and thus prevent formation of defects in the front surfaces of the joined members. Also, the joint width is increased, thus allowing greater joint strength.

Also, while the insertion depth during the friction stir welding in the first movement route L1 and that in the second movement route L2 may be set as appropriate, the joint mark of the groove formed in the front surfaces of the joined members may become large if the rotating tool F is inserted excessively deeply in the second movement route L2. In this regard, in the present embodiment, D2, which is the insertion depth of the rotating tool F in the second movement route L2, and D1, which is the insertion depth of the rotating tool F in the first movement route L1, are set such that D1 × 1.05 < D2 < D1 × 1.25. This prevents the joint mark of the groove formed in the front surfaces of the joined members from becoming large due to the rotating tool F being inserted excessively deeply in the second movement route L2.

Also, in the present embodiment, the fourth overlaying portion U is subjected to friction stir welding twice from the same side (from the front surface 3j of the sealing body 3). Even in such a case, it is possible to prevent formation of defects in the front surfaces of the joined members.

Also, while the insertion depth of the rotating tool F may be set as appropriate within a range within which the joined members can be joined, the position of the distal end F2a of the rotating tool F in the second movement route L2 for joining the fourth overlaying portion U, which is formed by laying the joined members one on top of the other, is lower than the fourth overlaying portion U in the present embodiment. This allows reliable joining of the jacket main body 2 and the sealing body 3 and enhances the joint strength between the jacket main body 2 and the sealing body 3. On the other hand, the position of the distal end F2a of the rotating tool F in the first movement route L1 is higher than the fourth overlaying portion U. This leaves room (margin) for lowering the height of the rotating tool F in the second movement route L2. Accordingly, the amount of insertion of the rotating tool F in the second movement route L2 is decreased, thereby reducing the joint mark of the groove formed in the front surfaces of the joined members and preventing excessive inflow of the material from sealing body 3.

Also, in the joining step in the present embodiment, the rotating tool F does not contact the crossbar part 15 and contacts only the sealing body 3 (second joined member) when joining the fourth overlaying portion U in the first movement route L1. Even in this case, the first plasticized region W (Wa) reaches the fourth overlaying portion U, so that the fourth overlaying portion U is joined. Also, even if the plasticized region W does not reach the fourth overlaying portion U, the rotating tool F acts so as to form concavities and convexities between the sealing body 3 and the jacket main body 2 and fit them to each other, or the oxide films between the sealing body 3 and the jacket main body 2 are destroyed and their substrates get partly blended, allowing pressure welding. This reduces the load on the joining apparatus (not shown).

Also, in the joining step in the present embodiment, while the insertion depth of the rotating tool F may be set as appropriate within a range within which the joined members can be joined, the height position of the distal end F2a of the stirring pin F2 is set to the same height as the first step bottom surfaces 12C, 12D, and 12E in the third movement route L3, and the height position of the distal end F2a of the rotating tool F is set lower than the front surface (first bottom surface) 15a of the crossbar part 15 in the second movement route L2. This keeps the oxide coating on the third butting and overlaying portion J3 from curling up while also securing a sufficient joint depth and thus preventing a decrease in joint strength.

Also, while the order of performing friction stir welding may be set as appropriate, the fourth movement route L4, the first movement route L1, third movement route L3, the second movement route L2, and the fifth movement route L5 are subjected to friction stir welding in this order in the present embodiment. By performing the friction stir welding of the fourth movement route L4 before performing the friction stir welding of the first movement route L1 (fourth overlaying portion U) as described above, the sealing body 3 can be partially joined (partially engaged) to the jacket main body 2.

Also, while the insertion depth of the rotating tool F may be set as appropriate within a range within which the joined members can be joined, in the joining step in the present embodiment, the height position of the distal end F2a of the stirring pin F2 is set to the same height position as the first step bottom surfaces 12C, 12D, and 12E in the third movement route L3, the height position of the distal end F2a of the stirring pin F2 is set to the same height position as the second step bottom surfaces 12A and 12B in the fourth movement route L4, the height position of the distal end F2a of the stirring pin F2 is set to the same height position as the third step bottom surfaces 12F, 12G, and 12H in the fifth movement route L5, and the height position of the distal end F2a of the stirring pin F2 is set lower than the front surface (first bottom surface) 15a of the crossbar part 15 in the second movement route L2. This keeps the oxide coating on each butting and overlaying portion from curling up while also securing a sufficient joint depth and thus preventing a decrease in joint strength.

Also, while the depth of the rotating tool F may be set as appropriate within a range within which the joined members can be joined, the present embodiment involves making the insertion depth of the rotating tool F shorter while moving the rotating tool F when moving from the fourth movement route L4 to the first movement route **L1** and when moving from the second movement route L2 to the fifth movement route L5. When the insertion depth of the rotating tool F is changed to a longer depth, abruptly changing the insertion depth is not problematic. On the other hand, when the insertion depth of the rotating tool F is changed to a shorter depth, reducing the insertion depth while moving the rotating tool F will prevent formation of surface defects.

Also, in the joining step in the present embodiment, friction stir welding is performed on the jacket main body (first joined member) 2 and the sealing body (second joined member) 3 in the third movement route L3, the fourth movement route L4, and the fifth movement route L5 with the rotation axis C of the rotating tool F slightly shifted toward the sealing body (second joined member) 3 from the respective butting portions. That is, the friction stirring is performed with the rotating tool F and the jacket main body 2 slight contacting each other, thereby minimizing inclusion of the material from the jacket main body (first joined member) 2 into the sealing body (second joined member) 3. Thus, at each butting portion, it is mainly the material of the sealing body (second joined member) that undergoes the friction stirring. This prevents a decrease in joint strength.

Also, while the materials of the joined members may be selected as appropriate, in the present embodiment, the jacket main body (first joined member) 2 is formed of the first aluminum alloy, and the sealing body (second joined member) 3 is formed of the second aluminum alloy, with the first aluminum alloy being a kind of material with a higher hardness than the second aluminum alloy. If the friction stir welding is performed with the rotation axis C of the rotating tool F and each butting portion aligned with each other, the difference in resistance between the materials received from the joined members may lead to a failure to uniformly stir the materials and thus cause defective joining. According to the present embodiment, however, the rotation axis C of the rotating tool F is displaced toward the sealing body 3 from each butting portion, allowing friction stirring that takes in a large amount of the second aluminum alloy, which is easier to stir. This facilitates uniform stirring and lowers the likelihood of defective joining.

Also, while the rotating tool may be in any form, in the present embodiment, the rotating tool F with the shoulder part F1 is used, and friction stir welding is performed with the shoulder part F1 in contact with the joined members. This makes it possible to hold down the plastically fluidized materials that are softened during the friction stir welding, and thus prevent formation of defects.

### [1-4. Others]

In the above embodiment, a case in which the fourth movement route L4, the first movement route L1, third movement route L3, the second movement route L2, and the fifth movement route L5 are subjected to friction stir welding in this order in the joining step has been exemplarily described. In the joining step, it suffices that at least part of the plasticized region formed in the first movement route L1 is plastically fluidized again by friction stirring in the second movement route L2. For example, the friction stirring in the first movement route L1 may be followed by disengaging the rotating tool F from the joined members and then inserting the rotating tool F into the joined members again and performing friction stirring in the second movement route L2.

In the above embodiment, a case has been exemplarily described in which the joining step involves the first movement route L1 for performing friction stir welding on the fourth overlaying portion U for the first time and the second movement route L2 for performing friction stir welding on the fourth overlaying portion U for the second time. The structure or the form of assembly of the portions of the joined members that are joined in the first movement route L1 and the second movement route L2 is not limited. For example, the structure or the form of assembly may be: an overlaying portion formed by laying the joined members one on top of the other; a butting portion formed by butting the joined members against each other; or a butting and overlaying portion formed by laying and butting them.

Also, the step side surfaces 13 of the jacket main body 2 may be inclined outward, for example. Also, the thickness of the sealing body 3 may be greater than the height dimension of the step side surfaces 13. This prevents formation of thin joints.

### [2. Second Embodiment]

Next, a friction stir welding method according to the second embodiment of the present invention will be described. The present embodiment differs from the above-described first embodiment in the shape of the jacket main body and the joining step.

### [2-1. Joined Members and Joined Body]

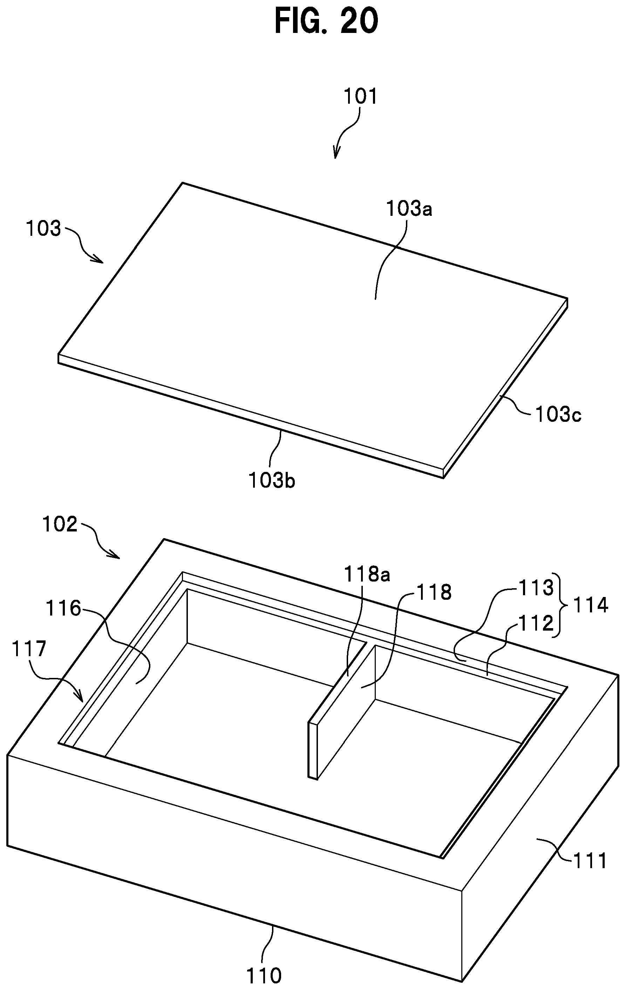

As shown in FIG. 20, a liquid-cooling jacket 101 according to the present embodiment includes a jacket main body 102 and a sealing body 103. The jacket main body (first joined member) 102 includes a bottom part 110, a peripheral wall part 111, and a support part 118. The bottom part 110 is a plate-shaped part having a rectangular shape. The peripheral wall part 111 is a part rising in a frame shape from a peripheral edge portion of the bottom part 110. A recess portion 116 is formed as a hollow portion on the inside of the bottom part 110 and the peripheral wall part 111, and also an opening portion 117 opening on the upper side is formed.

The support part 118 has a plate shape and perpendicularly protrudes from one inner side surface of the peripheral wall part 111. The support part 118 is not coupled to the other inner side surfaces of the peripheral wall part 111. A step portion 114 is formed over the entirety of an inner peripheral edge of the peripheral wall part 111 in the circumferential direction. The step portion 114 is formed of a step bottom surface 112 and a step side surface 113 rising from the step bottom surface 112. The step bottom surface 112 and a front surface (first bottom surface) 118a of the support part 118 are flush with each other.

The sealing body (second joined member) 103 is a rectangular plate-shaped member. The sealing body 103 has substantially the same shape as the outer edge of the step portion 114. The sealing body 103 includes a front surface 103a, a back surface 103b, and a side surface 103c.

### [2-2. Manufacturing Method]

Next, a method for manufacturing the joined body according to the present embodiment (friction stir welding method) will be described. The friction stir welding method according to the present embodiment involves a preparation step, a placement step, and a joining step.

### <Preparation Step>

The preparation step is a step of preparing the jacket main body 102 and the sealing body 103. While the method for manufacturing the jacket main body 102 and the sealing body 103 is not particularly limited, the jacket main body 102 is shaped by die casting, for example. The sealing body 103 is shaped by extrusion, for example.

### <Placement Step>

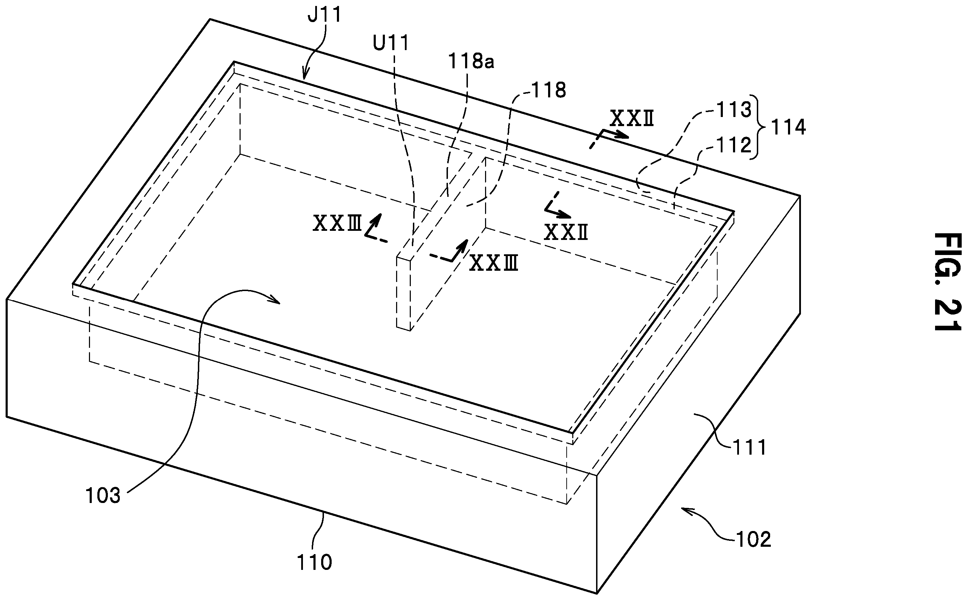

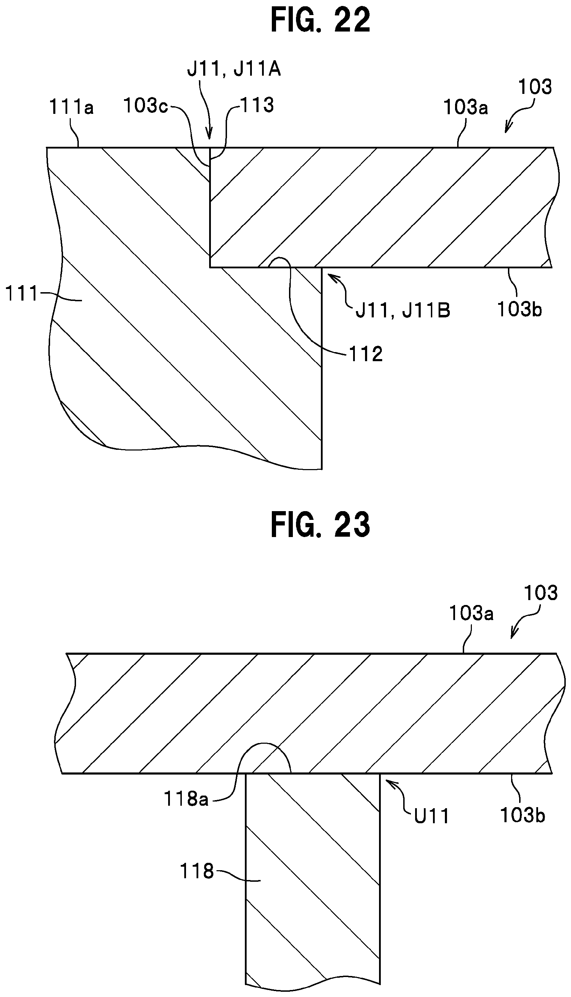

As shown in FIG. 21, the placement step is a step of placing the sealing body 103 on the jacket main body 102 to thereby form butting portions and overlaying portions. In the present embodiment, a butting and overlaying portion J11 and an overlaying portion U11 are formed. As shown in FIG. 22, a butting portion J11A is a portion formed by butting the side surface 103c of the sealing body 103 and the step side surface 113 against each other. The butting portion J11A has a rectangular frame shape in a plan view. Also, an overlaying portion J11B is a portion formed by laying the step bottom surface 112 and the back surface 103b of the sealing body 103 one on top of the other. The butting portion J11A and the overlaying portion J11B form the butting and overlaying portion J11. An end surface 111a of the peripheral wall part 111 and the front surface 103a of the sealing body 103 are flush with each other.

As shown in FIG. 23, the overlaying portion U11 is a portion formed by laying the front surface (first surface) 118a of the support part 118 and the back surface 103b of the sealing body 103 one on top of the other. The overlaying portion U11 has a rectangular shape in a plan view.

### <Joining Step>

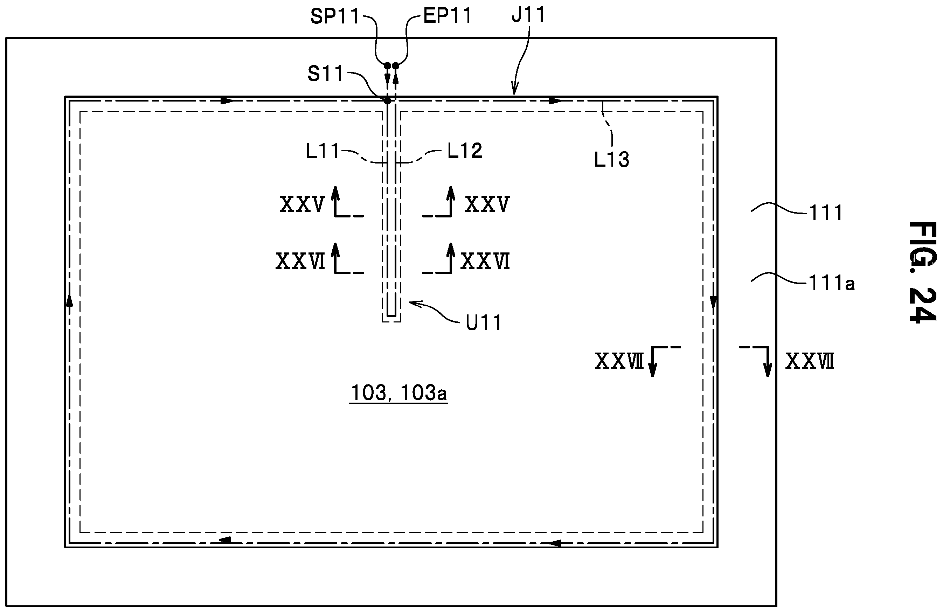

The joining step is a step of performing friction stir welding on the jacket main body 102 and the sealing body 103 with a rotating tool F as shown in FIG. 24. In the joining step, the friction stir welding is performed with the rotating tool F rotated clockwise. In the joining step, the friction stir welding is performed continuously by moving the rotating tool F along the butting portion J11A and the overlaying portion U11 without disengaging the rotating tool F partway. In the joining step, the rotating tool F is inserted at a start position SP11, then moved along the overlaying portion U11 and, once reaching the distal end of the support part 118, moved back along the overlaying portion U11 again. After reaching the vicinity of an intermediate position S11, the rotating tool F is moved clockwise along the butting portion J11A to go around the sealing body 103 once. After passing the intermediate position S11, the rotating tool F is disengaged at an end position EP11.

More specifically, first, the start position SP11 at which to insert the rotating tool F is set on the end surface 111a of the peripheral wall part 111. The start position SP11 may be provided on the front surface 103a of the sealing body 103. After inserting the rotating tool F at the start position SP11, the rotating tool F is gradually pushed in deeper while it is moved toward the overlaying portion U11.

### <Overlaying Portion U11: First Friction Stir Welding: First Movement Route L11>

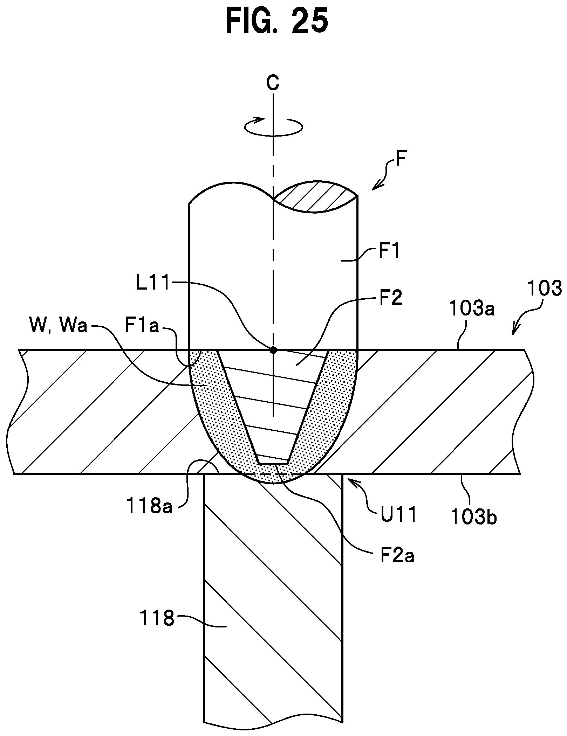

In the first friction stir welding of the overlaying portion U11, an insertion depth D11 is set so as to bring a lower end surface F1a of a shoulder part F1 into contact with the front surface 103a of the sealing body 103 while keeping a distal end F2a of a stirring pin F2 from reaching the overlaying portion U11, as shown in FIG. 25. Although the distal end F2a of the stirring pin F2 does not reach the support part 118, a plasticized region W reaches the front surface 118a, thereby allowing friction stir welding of the overlaying portion U11. Also, even if the plasticized region W does not reach the overlaying portion U11, the rotating tool F acts so as to form concavities and convexities between the sealing body 3 and the jacket main body 2 and fit them to each other, or the oxide films between the sealing body 3 and the jacket main body 2 are destroyed and their substrates get partly blended, allowing pressure welding.

As shown in FIG. 25, a first movement route L11 which is the movement route of the rotating tool F during the first friction stir welding of the overlaying portion U11 is set substantially at the center of the overlaying portion U11 in the width direction. Once reaching the distal end of the overlaying portion U11, the rotating tool F is moved back to proceed with the second friction stir welding of the overlaying portion U11 without interruption.

### <overlaying portion U11: Second Friction Stir Welding: Second Movement Route L12>

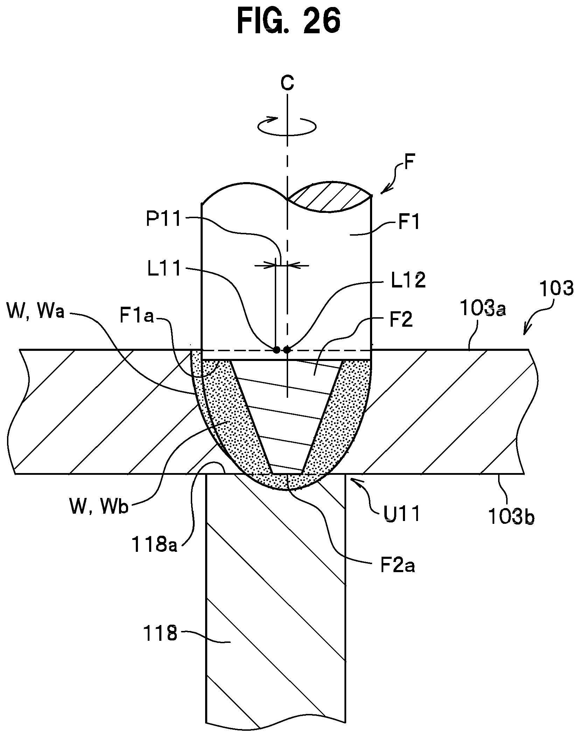

As shown in FIG. 26, in the second friction stir welding of the overlaying portion U11, an insertion depth D12 is set so as to push the lower end surface F1a of the shoulder part F1 slightly into the front surface 103a of the sealing body 103 and make the distal end F2a of the stirring pin F2 reach the support part 118 (overlaying portion U11). When moving from the first movement route L11 to second movement route L12, the rotating tool F is moved back with its height position made gradually lower (deeper).

As shown in FIG. 26, a second movement route L12 which is the movement route of the rotating tool F during the second friction stir welding of the overlaying portion U11 is slightly displaced from the position of a rotation axis C in the first movement route L11 in the left-right direction (right direction in the present case) with respect to the direction of travel of the rotating tool F. Thus, the first plasticized region W (Wa) and the second plasticized region W (Wb) are formed to be slight offset from each other. While an amount of displacement P11 between the first movement route L11 (first friction stir welding) and the second movement route L12 (second friction stir welding) for the overlaying portion U11 may be set as appropriate, it is preferably 0.1 < P11 (mm), more preferably 0.2 < P11 (mm), further preferably 0.3 < P11 (mm), preferably P11 < 1.2 (mm), more preferably P11 < 1.0 (mm), and further preferably P11 < 0.8 (mm).

Also, D12 < D11 × 1.25 is preferable, D12 < D11 × 1.20 is more preferable, and D12 < D11 × 1.15 is further preferable, where D12 is the insertion depth of the rotating tool F in the second movement route L12 (second friction stir welding), and D11 is the insertion depth of the rotating tool F in the first movement route L11 (first friction stir welding). The insertion depths each refer to the distance from the front surface of a joined member (the front surface 103a of the sealing body 103 in the present case) to the distal end F2a of the stirring pin F2. As shown in FIG. 24, after reaching the vicinity of the intermediate position S11, the rotating tool F proceeds with the friction stir welding of the butting and overlaying portion J11 without interruption.

### <butting and overlaying portion J11: Third Movement Route L13>

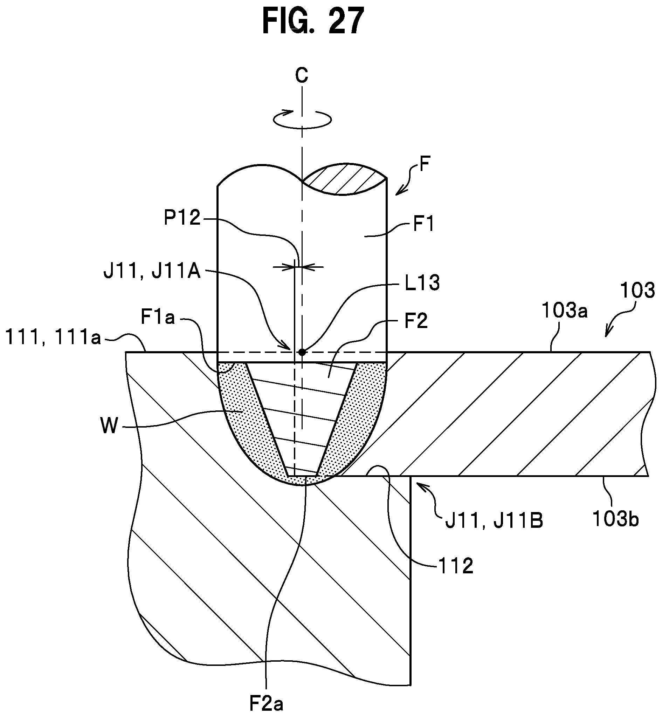

As shown in FIG. 27, once reaching the butting and overlaying portion J11, the rotating tool F is inserted to an insertion depth D13 set so as to push the lower end surface F1a of the shoulder part F1 slightly into the end surface 111a of the peripheral wall part 111 and the front surface 103a of the sealing body 103 and set the distal end F2a of the stirring pin F2 at the same height position as the step bottom surface 112. The rotating tool F is moved clockwise along the butting portion J11A while maintaining this insertion depth D13 to thereby perform friction stir welding on the butting portion J11A and the overlaying portion J11B. When moving from the overlaying portion U11 to the butting and overlaying portion J11, it is preferable to perform the friction stir welding by gradually making the height position of the rotating tool F higher (shallower) while moving the rotating tool F.

While the rotation axis C of the rotating tool F may be aligned with the butting portion J11A, the friction stir welding is performed in the present embodiment with the rotation axis C displaced inward (toward the sealing body 103) from the butting portion J11A. More specifically, as shown in FIG. 27, a third movement route L13 which is the movement route of the rotating tool F during the friction stir welding of the butting and overlaying portion J11 is set at positions that are present along the butting portion J11A and slightly displaced inward from the butting portion J11A. An amount of displacement P12 from the butting portion J11A to the third movement route L13 is preferably 0.1 < P12 (mm), more preferably 0.2 < P12 (mm), preferably P12 < 0.5 (mm), and more preferably P12 < 0.4 (mm). The rotating tool F is moved along the butting and overlaying portion J11 to go around it once and, after passing the intermediate position S11, the rotating tool F is gradually pulled up while being moved toward the end position EP11. Once reaching the end position EP11, the rotating tool F is disengaged from the peripheral wall part 111.

The friction stir welding method according to the present embodiment described above brings about substantially the same advantageous effects as those of the first embodiment. Including the support part 118 and performing friction stir welding on the support part 118 and the sealing body 103 enhances the strength of the liquid-cooling jacket 101.

### [3. Third Embodiment]

Next, a friction stir welding method according to a third embodiment of the present invention will be described. The present embodiment differs from the above-described first embodiment in the shape of the jacket main body and the joining step.

### [3-1. Joined Members and Joined Body]

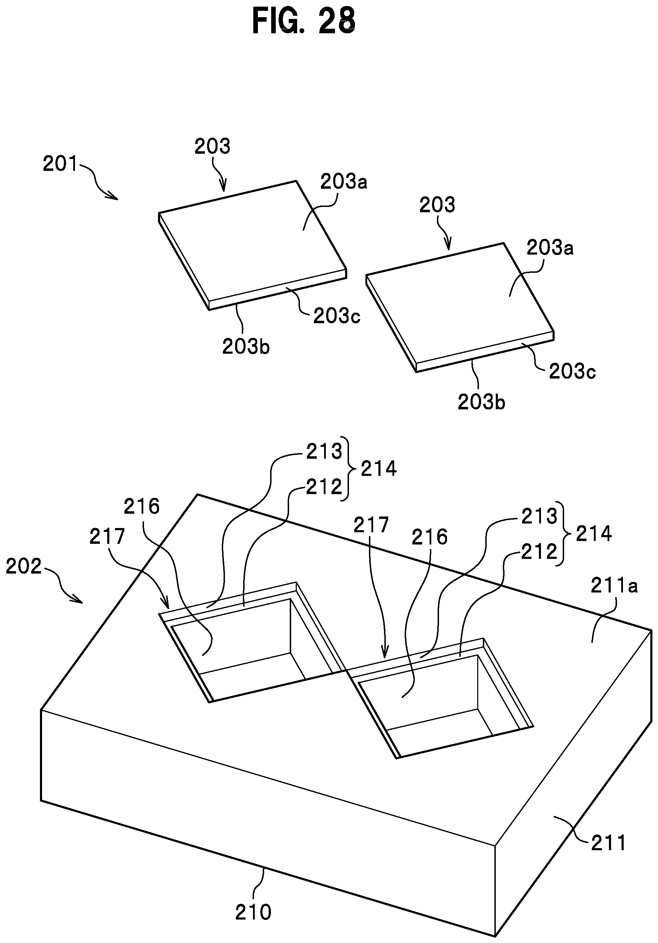

As shown in FIG. 28, a liquid-cooling jacket 201 according to the present embodiment includes a jacket main body 202 and sealing bodies 203 and 203. The jacket main body (first joined member) 202 includes a bottom part 210 and a peripheral wall part 211. The bottom part 210 is a plate-shaped part having a rectangular shape. The peripheral wall part 211 is a part rising from a peripheral edge portion of the bottom part 210. Recess portions 216 and 216 are formed as hollow portions on the inside of the peripheral wall part 211, and also opening portions 217 and 217 opening on the upper side are formed. The recess portions 216 and 216 are formed with corners thereof positioned adjacent to each other.

A step portion 214 is formed over the entirety of the outer peripheral edge of each recess portion 216 in the circumferential direction. The step portion 214 is formed of a step bottom surface 212 and a step side surface 213 rising from the step bottom surface 212. Note that the dimensions of the step portions 214 and 214 are identical to each other.

Each sealing body (second joined member) 203 is a rectangular plate-shaped member. The sealing body 203 has substantially the same shape as the outer edge of the step portion 214. The sealing body 203 includes a front surface 203a, a back surface 203b, and a side surface 203c.

### [3-2. Manufacturing Method]

Next, a method for manufacturing the joined body according to the present embodiment (friction stir welding method) will be described. The friction stir welding method according to the present embodiment involves a preparation step, a placement step, and a joining step.

### <Preparation Step>

The preparation step is a step of preparing the jacket main body 202 and the sealing body 203. While the method for manufacturing the jacket main body 202 and the sealing body 203 is not particularly limited, the jacket main body 202 is shaped by die casting, for example. The sealing body 203 is shaped by extrusion, for example.

### <Placement Step>

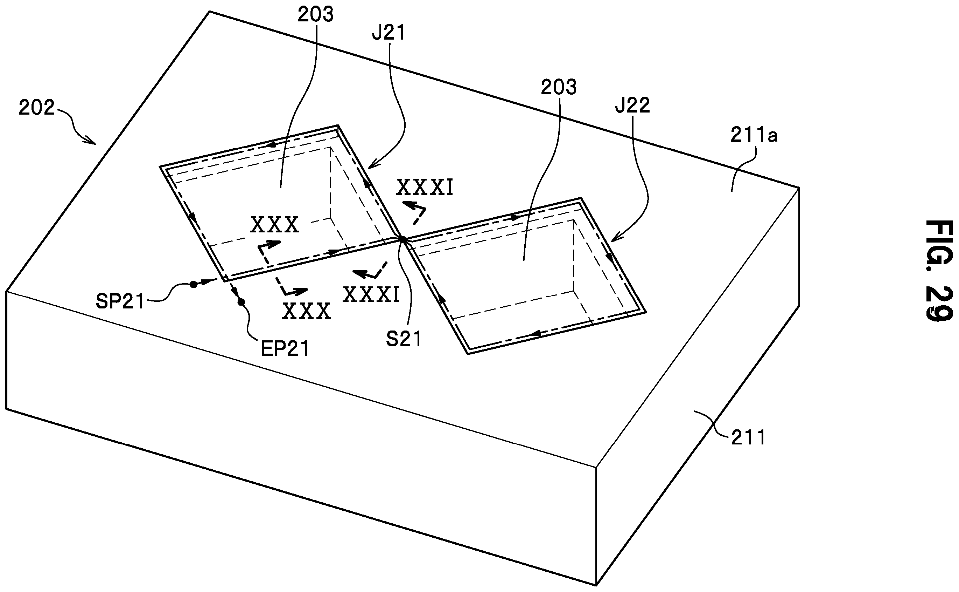

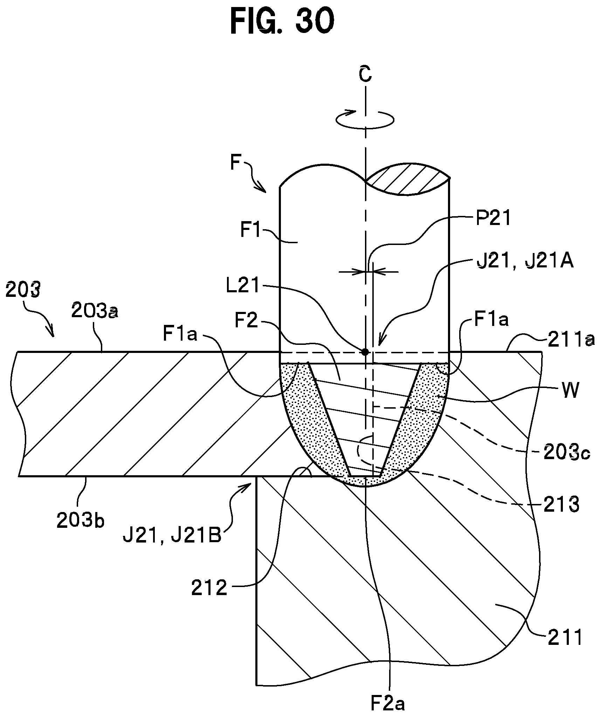

As shown in FIG. 29, the placement step is a step of placing each sealing body 203 on the jacket main body 202 to thereby form butting portions. In the present embodiment, butting and overlaying portions J21 and J22 are formed. As shown in FIG. 30 too, the butting and overlaying portion J21 includes a butting portion J21A and an overlaying portion J21B. The butting portion J21A is a portion where the step side surface 213 and the side surface 203c of the sealing body 3 are butted against each other. The overlaying portion J21B is a portion where the step bottom surface 212 and the back surface 203b of the sealing body 203 are laid one on top of the other. The butting and overlaying portion J21 has a rectangular shape in a plan view. Detailed description of the butting and overlaying portion J22, which is identical to the butting and overlaying portion J21, is omitted. Corners of the butting and overlaying portions J21 and J22 are in contact with each other at one point (intermediate position S21).

### <Joining Step>

The joining step is a step of performing friction stir welding on the jacket main body 202 and each sealing body 203 with a rotating tool F as shown in FIG. 30. In the joining step, the friction stir welding is performed with the rotating tool F rotated clockwise. In the joining step, the friction stir welding is continuously performed on the butting and overlaying portions J21 and J22 by moving the rotating tool F along the butting and overlaying portion J21 on one side and not disengaging the rotating tool F partway. In the joining step, the rotating tool F is inserted at a start position SP21, then moved along the butting portion J21A and, once passing the intermediate position S21, moved into the butting and overlaying portion J22. The rotating tool F is moved along a butting portion J22A and, once passing the intermediate position S21 again, performs friction stir welding on the portion of the butting and overlaying portion J21 that has not yet been subjected to friction stir welding. After performing friction stir welding on the entire butting and overlaying portion J21, the rotating tool F is disengaged at an end position EP21.

More specifically, first, the start position SP21 at which to insert the rotating tool F is set on an end surface 211a of the peripheral wall part 211. The start position SP21 may be provided on the front surface 203a of the sealing body 203. After inserting the rotating tool F at the start position SP21, the rotating tool F is gradually pushed in deeper while it is moved toward the butting and overlaying portion J21.

### <Butting and Overlaying Portion J21>

As shown in FIG. 30, once reaching the butting and overlaying portion J21, the rotating tool F is inserted to an insertion depth D21 set so as to push a lower end surface F1a of a shoulder part F1 slightly into the end surface 211a of the peripheral wall part 211 and the front surface 203a of the sealing body 203 and set a distal end F2a of a stirring pin F2 at the same height position as the step bottom surface 212. The rotating tool F is moved clockwise along the butting and overlaying portion J21 while maintaining this insertion depth D21 to thereby perform friction stir welding on the butting portion J21A and the overlaying portion J21B.

While a rotation axis C of the rotating tool F may be aligned with the butting portion J21A, the friction stir welding is performed in the present embodiment with the rotation axis C displaced inward (toward the sealing body 203) from the butting portion J21A. More specifically, as shown in FIG. 30, a movement route L21 which is considered the movement route of the rotating tool F during the friction stir welding of the butting and overlaying portion J21 is set at positions that are present along the butting portion J21A and slightly displaced inward from the butting portion J21A. An amount of displacement P21 from the butting portion J21A to the movement route L21 is preferably 0.1 < P21 (mm), more preferably 0.2 < P21 (mm), preferably P21 < 0.5 (mm), and more preferably P21 < 0.4 (mm).

### <Intermediate Position S21: First Friction Stir Welding>

After reaching the vicinity of the intermediate position S21, the rotating tool F passes the intermediate position S21 while keeping the height position of the rotating tool F unchanged and maintaining the insertion depth D21, and performs friction stir welding of the butting and overlaying portion J22.

### <Butting and Overlaying Portion J22>

As shown in FIG. 29, at the butting and overlaying portion J22, the rotating tool F is moved clockwise to perform friction stir welding on the jacket main body 202 and the sealing body 203. The friction stir welding of the butting and overlaying portion J22 is performed in the same manner as that of the butting and overlaying portion J21.

### <Intermediate Position S21: Second Friction Stir Welding>

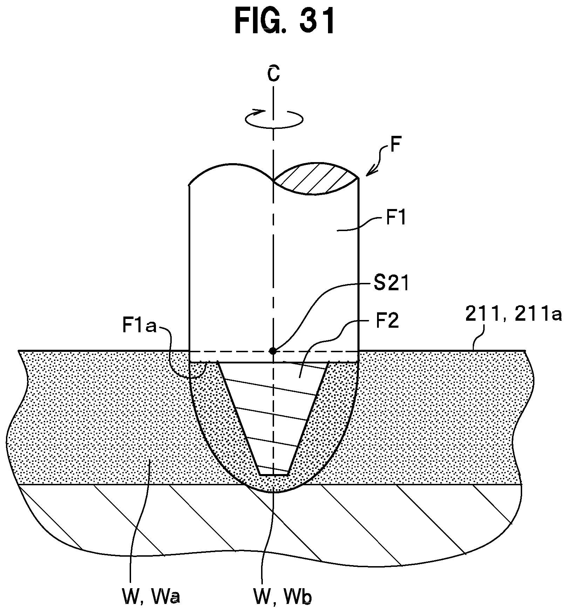

As shown in FIG. 29, when the rotating tool F gets near the intermediate position S21 again, the rotating tool F continues to be moved along the butting and overlaying portion J22 while the rotating tool F is gradually pushed in (deeper). As shown in FIG. 31, the amount of insertion of the rotating tool F at the time of passing the intermediate position S21 is set to an insertion depth D22 greater than the insertion depth during the first friction stir welding. In the present embodiment, the insertion depth D22 is set such that a plasticized region W (Wb) formed during the second passage is formed at a deeper position than the first plasticized region W (Wa).

### <Butting and Overlaying Portion J21>

Once passing the intermediate position S21, the rotating tool F performs friction stir welding on the portion of the butting and overlaying portion J21 that has not yet been subjected to friction stir welding (three edges). That is, the rotating tool F is moved counterclockwise along the butting portion J21A to perform friction stir welding on the jacket main body 202 and the sealing body 203. Once performing friction stir welding on the entire butting and overlaying portion J21, the rotating tool F is gradually pulled up while being moved toward the end position EP21. Once reaching the end position EP21, the rotating tool F is disengaged from the peripheral wall part 211.

It is possible to achieve substantially the same advantageous effects as those of the first embodiment even when the butting and overlaying portions J21 and J22 have a substantially ∞-shape (a symbol substantially representing infinity) in a plan view with which they cross each other at one point, as in the present embodiment. It is preferable to set the rotating tool F gradually deeper before the crossing point (the intermediate position S21 in the present embodiment) when passing the intermediate position S21 for the second time, and move the rotating tool F while gradually raising it after passing the intermediate position S21. That is, avoiding abrupt movement of the rotating tool F in the height direction will prevent formation of defects.

Note that, in the present embodiment, the direction of rotation of the rotating tool F is fixed, but the direction of rotation of the rotating tool F may be reversed between the butting and overlaying portion J21 and the butting and overlaying portion J22 such that the jacket main body 202 side will always be the flow side (or the sealing body 203 side will always be the flow side), for example.

Also, in the present embodiment, the start position may be set at the intermediate position S21, friction stir welding may be performed clockwise on the butting and overlaying portion J21 from the intermediate position S21, and friction stir welding may be performed counterclockwise on the butting and overlaying portion J22 after passing the intermediate position S21. This also allows the jacket main body 202 side to always be the flow side (or the sealing body 203 side to always be the flow side). In other words, the direction of travel of the rotating tool F may be reversed between the butting and overlaying portion J21 and the butting and overlaying portion J22.

### [4. First Modified Example]

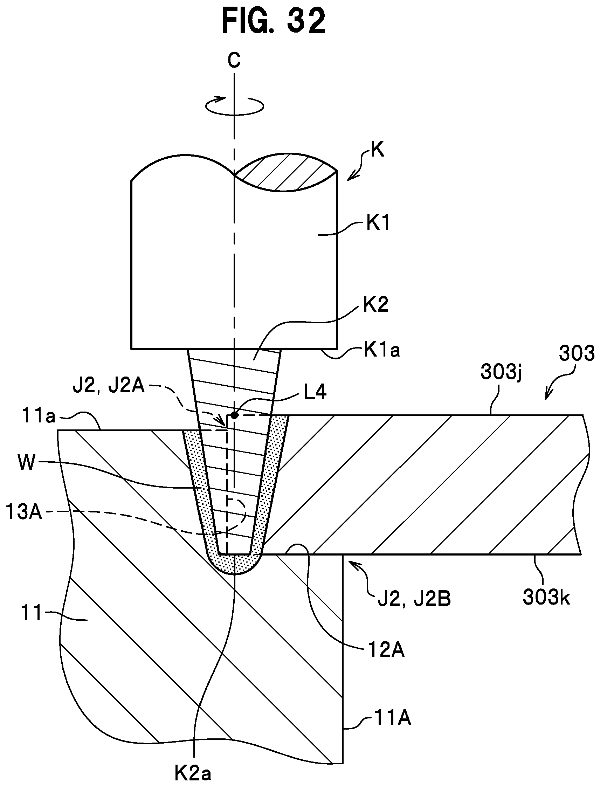

Next, a first modified example of the above-described embodiments will be described. A friction stir welding method according to the present modified example differs from the above-described embodiments in that a rotating tool K is used, as shown in FIG. 32.

The rotating tool K includes a base part K1 and a stirring pin K2. The base part K1 is a part to be coupled to the output shaft of a joining apparatus (not shown), and has a column shape or a frustum shape. The stirring pin K2 extends downward from the center of a lower end surface K1a of the base part K1. The stirring pin K2 has a truncated cone shape that decreases in diameter from the lower end surface K1a of the base part K1 as a proximal end toward a distal end. A distal end K2a of the stirring pin K2 is flat. A helical groove is formed over the entirety of the outer peripheral surface of the stirring pin K2 in the height direction. While the helical groove can be either right-handed or left-handed, it is left-handed (counterclockwise when viewed from above) in the present embodiment.

The friction stir welding method according to the present modified example involves a preparation step, a placement step, and a joining step. In the preparation step, the thickness of a sealing body 303 is set to be greater than the height dimension of the second step side surface 13A. The placement step is generally the same as those described in the above-described embodiments.

In the joining step for a joined body in the present modified example, as shown in FIG. 32, the rotating tool K is rotated clockwise and the rotating tool K is moved with its rotation axis C aligned with the fourth movement route L4 and set in parallel to the second butting portions J2A. While the insertion depth of the stirring pin F2 may be set as appropriate, in the present modified example, the insertion depth D4 is set such that the distal end K2a will be at the same height position as the second step bottom surface 12A. In the joining step, the friction stir welding is performed with only the stirring pin K2 in contact with the joined members (the jacket main body 2 and the sealing body 303 in the present case) and with a proximal end side of the stirring pin K2 exposed.

The rotating tool K in the present modified example also brings about substantially the same advantageous effects as those of the above-described embodiments. Also, in the joining step, the friction stir welding is performed with only the stirring pin K2 in contact with the joined members and without the base part K1 in contact with the joined members. This reduces the load on the joining apparatus.

### 15. Second Modified Example]

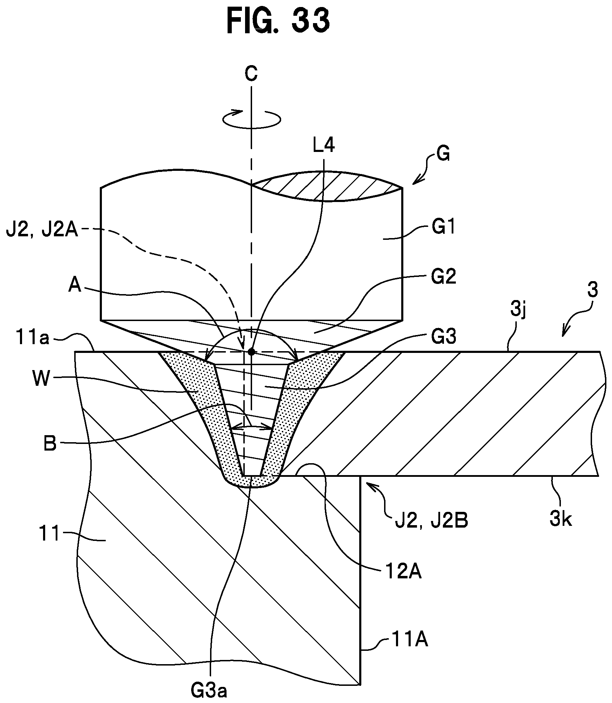

Next, a second modified example of the above-described embodiments will be described. A method for manufacturing a joined body according to the present modified example differs from the above-described embodiments in that a rotating tool G is used, as shown in FIG. 33.

The rotating tool G is formed of tool steel, for example, and mainly includes a base part G1 and a stirring pin (a proximal end-side pin G2 and a distal end-side pin G3). The base part G1 is a part that has a column shape or a frustum shape and is to be connected to the output shaft of a joining apparatus.

The proximal end-side pin G2 is continuous with the base part G1 and tapered toward the distal end. The proximal end-side pin G2 has a truncated cone shape. While a taper angle A of the proximal end-side pin G2 may be set as appropriate, it is 135 to 160°, for example. Setting the taper angle A to 135 to 160° reduces the joint surface roughness after friction stirring.

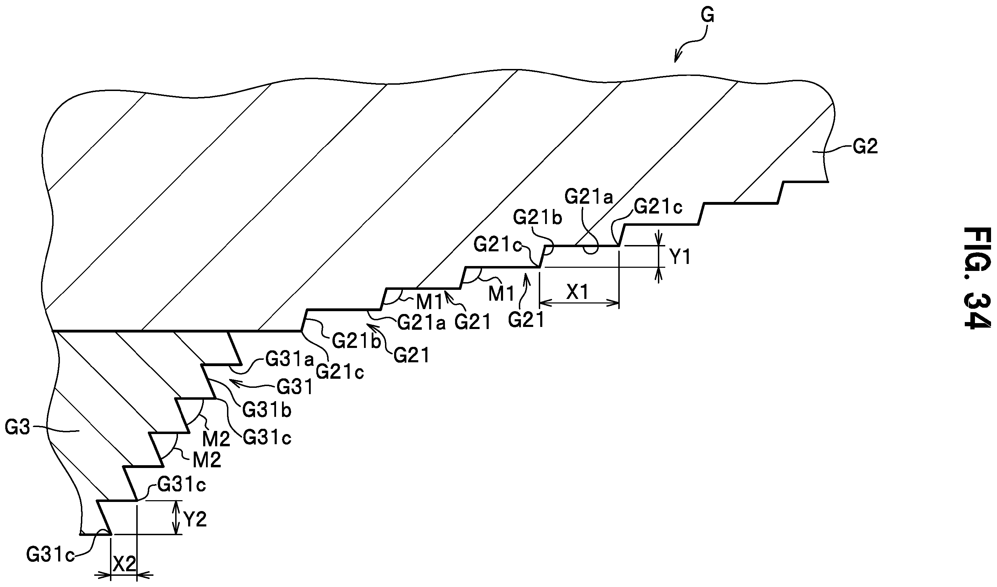

The taper angle A is larger than a taper angle B of the distal end-side pin G3 to be described later. As shown in FIG. 34, staircase-shaped pin step portions G21 are formed over the entirety of the outer peripheral surface of the proximal end-side pin G2 in the height direction. The pin step portions G21 are formed in a right-handed or left-handed helical shape. That is, the pin step portions G21 have a helical shape in a plan view and a staircase shape in a side view. In the present modified example, the pin step portions G21 are configured to be a left-handed twist from the proximal end toward the distal end.

As shown in FIG. 34, the pin step portions G21 include step bottom surfaces G21a and step side surfaces G21b. A distance (horizontal distance) X1 between vertices G21c and G21c of adjacent pin step portions G21 is set as appropriate according to a step angle M1 and a height Y1 of the step side surface G21b.

While the height Y1 of the step side surface F21b may be set as appropriate, it is set to 0.1 to 0.4 mm, for example. The joint surface roughness will be high if the height Y1 is less than 0.1 mm. On the other hand, if the height Y1 exceeds 0.4 mm, the joint surface roughness tends to be high and also the effective number of step portions (the number of pin step portions G21 to be in contact with the metal members joined) decreases.

While the step angle M1 formed by a step bottom surface G21a and a step side surface G21b may be set as appropriate, it is set to 85 to 120°, for example. In the present embodiment, the step bottom surfaces G21a are parallel to a horizontal plane (a plane perpendicular to the rotation axis C in the present case). The step bottom surfaces G21a may be inclined within a range of -5° to 15° with respect to the horizontal plane from the rotation axis C toward the outer periphery (a negative angle represents a downward inclination with respect to the horizontal plane, and a positive angle represents an upward inclination with respect to the horizontal plane). The distance X1, the height Y1 of the step side surfaces G21b, the step angle M1, and the angle of the step bottom surfaces G21a with respect to the horizontal plane are set as appropriate such that, when friction stirring is performed, the plastically fluidized materials will be discharged from the pin step portions G21 without stagnating on and adhering to the inside of the pin step portions G21, and the step bottom surfaces G21a will hold down the plastically fluidized materials so as to make the joint surface roughness low.

As shown in FIG. 33, the distal end-side pin G3 is formed to be continuous with the proximal end-side pin G2. The distal end-side pin G3 has a truncated cone shape. A distal end G3a of the distal end-side pin G3 is flat. The taper angle B of the distal end-side pin G3 is smaller than the taper angle A of the proximal end-side pin G2. As shown in FIG. 34, a helical groove G31 is carved in the outer peripheral surface of the distal end-side pin G3. While the helical groove G31 can be either right-handed or left-handed, it is carved in the left-handed direction in the present embodiment.

The helical groove G31 includes a helical bottom surface G31a and a helical side surface G31b. The distance (horizontal distance) between adjacent vertices G31c and G31c of the helical groove G31 is a length X2. The height of the helical side surface G31b is a height Y2. A helix angle M2 formed by the helical bottom surface G31a and the helical side surface G31b is 45 to 90°, for example. The helical groove G31 serves to raise frictional heat by contacting the joined members and also to guide the plastically fluidized materials toward the distal end. The helix angle M2, the length X2, and the height Y2 may be set as appropriate.

The friction stir welding method according to the present modified example involves a preparation step, a placement step, and a joining step. The preparation step and the placement step are the same as those in the above-described first embodiment.

In the joining step, as shown in FIG. 33, the rotating tool G is rotated clockwise (rotated in the forward direction) and the rotating tool G is moved with its rotation axis C aligned with the fourth movement route L4 and set in parallel to the second butting portions J2A. In the joining step, the insertion depth D4 is set so as to bring the outer peripheral surface of the proximal end-side pin G2 into contact with the front surface 3j of the sealing body 3 and the end surface 11a of the peripheral wall part 11 and set the distal end of the distal end-side pin G3 at the same height position as the second step bottom surface 12A.

The rotating tool G in the present modified example also brings about substantially the same advantageous effects as those of the above-described embodiments. Also, in the joining step, the outer peripheral surface of the proximal end-side pin G2 holds down the plastically fluidized materials. This reduces the size of the step groove formed in the joint surface and also eliminates or reduces the size of the protrusions formed on the sides of the step groove. Also, the staircase-shaped pin step portions G21 are shallow and have wide exits. This makes it easy to discharge the plastically fluidized materials from the pin step portions G21 while holding down the plastically fluidized materials are with the step bottom surfaces G21a. Hence, the plastically fluidized materials are unlikely to adhere to the outer peripheral surface of the proximal end-side pin G2 even when the plastically fluidized materials are held down by the proximal end-side pin G2. This makes the joint surface roughness low and also stables the joint quality in a preferred manner.

Also, the rotating tool G according to the present embodiment includes the proximal end-side pin G2 and the distal end-side pin G3 with a smaller taper angle than the taper angle A of the proximal end-side pin G2. This makes it easy to insert the rotating tool G into the jacket main body 2 and the sealing body 3. Also, the taper angle B of the distal end-side pin G3, which is small, makes it easy to insert the rotating tool G to a deep position in the second butting portions J2A.

### Examples

Next, a test 1 was conducted to confirm advantageous effects of the present invention. In the test 1, friction stir welding was performed in the same manner as in the above-described first embodiment. Specifically, referring to FIG. 2 and other drawings, in the test 1, friction stir welding was performed on the second butting and overlaying portion J2 (fourth movement route L4), the fourth overlaying portion U (first movement route L1), the first butting and overlaying portion J1 (third movement route L3), the fourth overlaying portion U (second movement route L2), and the third butting and overlaying portion J3 (fifth movement route L5) in this order.

In the example, the outer diameter of the shoulder part F1 of the rotating tool F was 11.5 mm, and the length of the stirring pin F2 was 3.05 mm. The taper angle of the stirring pin F2 was 26.4°. Also, the helical groove in the stirring pin F2 was a left-handed helical groove, and the friction stir welding was performed with the rotating tool F rotated clockwise.

The insertion depth (the distance from the end surface 11a of the peripheral wall part 11 to the distal end F2a of the stirring pin F2) at the second butting and overlaying portion J2 (fourth movement route L4) in the example was set to 3.4 mm. The insertion depth was set to push the lower end surface F1a of the shoulder part F1 slightly into the joined members and set the distal end F2a of the stirring pin F2 at the same height position as the second step bottom surface 12A.

The insertion depth at the fourth overlaying portion U (first friction stir welding: first movement route L1) in the example was set to 3.2 mm. The insertion depth was set to push the lower end surface F1a of the shoulder part F1 slightly into the joined members and position the distal end F2a of the stirring pin F2 above the front surface 15a of the crossbar part 15.

The insertion depth at the first butting and overlaying portion J1 (third movement route L3) in the example was set to 3.4 mm. The insertion depth was set to push the lower end surface F1a of the shoulder part F1 slightly into the joined members and set the distal end F2a of the stirring pin F2 at the same height position as the first step bottom surface 12E.

The insertion depth at the fourth overlaying portion U (second friction stir welding: second movement route L2) in the example was set to 3.7 mm. The insertion depth was set to push the lower end surface F1a of the shoulder part F1 slightly into the joined members and position the distal end F2a of the stirring pin F2 below the front surface 15a of the crossbar part

The insertion depth at the third butting and overlaying portion J3 (fifth movement route L5) in the example was set to 3.4 mm. The insertion depth was set to push the lower end surface F1a of the shoulder part F1 slightly into the joined members and set the distal end F2a of the stirring pin F2 at the same height position as the third step bottom surface 12G.

In a comparative example, the height position of the rotating tool F during the first friction stir welding of the fourth overlaying portion U and that during the second friction stir welding were the same height position. The other conditions are the same as those in the example.

According to the above-described example, the rotating tool F was inserted deeper during the second friction stir welding of the fourth overlaying portion U than during the first friction stir welding. This compensates for the thinning when the second friction stir welding is performed. That is, although a movement route of the rotating tool F had an overlap, formation of defects in the front surfaces of the joined member was prevented.

In the comparative example, on the other hand, the height position of the rotating tool F during the first friction stir welding and that during the second friction stir welding were the same height. This reduced the amount of the materials to be plastically fluidized in the second friction stir welding and resulted in formation of surface defects.

### Reference Signs List

- 1: liquid-cooling jacket (joined body)
- 2: jacket main body (first joined member)
- 3: sealing body (second joined member)
- 10: bottom part
- 11: peripheral wall part
- 15a: front surface (first bottom surface)
- D1: insertion depth
- D2: insertion depth
- F: rotating tool
- F1: shoulder part
- F2: stirring pin
- G: rotating tool
- G2: proximal end-side pin
- G3: distal end-side pin
- G21: pin step portion
- J1: first butting and overlaying portion
- J2: second butting and overlaying portion
- J3: third butting and overlaying portion
- K: rotating tool
- K1: base part
- K2: stirring pin
- L1: first movement route
- L2: second movement route
- L3: third movement route
- L4: fourth movement route
- L5: fifth movement route
- U: fourth overlaying portion
- W: plasticized region

## Claims

1. A method for performing friction stir welding on joined members with a rotating tool, **characterized in that**
the method comprises a joining step of joining the joined members by moving the rotating tool along a movement route set on the joined members,
the movement route is set up to include
a first movement route along which the rotating tool is moved to friction-stir the joined members and thereby form a plasticized region, and
a second movement route along which the rotating tool is moved in a state where the rotating tool is inserted from a same side as in the first movement route to friction-stir the joined members and thereby plastically re-fluidize a portion of the plasticized region formed in the first movement route, and
an insertion depth of the rotating tool during the plastic re-fluidization by the rotating tool in the second movement route is greater than an insertion depth of the rotating tool during the formation of the plasticized region in the first movement route.

2. The friction stir welding method according to claim 1, wherein a position of a rotation axis of the rotating tool in the second movement route is displaced from a position of the rotation axis in the first movement route in a left-right direction with respect to a direction of travel of the rotating tool.

3. The friction stir welding method according to claim 1, wherein D1 × 1.05 < D2 < D1 × 1.25 is satisfied, where D2 is an insertion depth of the rotating tool in the second movement route, and D1 is an insertion depth of the rotating tool in the first movement route.

4. The friction stir welding method according to claim 1, wherein after the rotating tool passes through the first movement route, the rotating tool passes through the second movement route in a same direction as a direction of travel of the rotating tool in the first movement route.

5. The friction stir welding method according to claim 1, wherein after the rotating tool passes through the first movement route, the rotating tool passes through the second movement route in an opposite direction from a direction of travel of the rotating tool in the first movement route.

6. The friction stir welding method according to claim 1, wherein after the rotating tool passes through the first movement route, the rotating tool passes through the second movement route so as to cross a direction of travel of the rotating tool in the first movement route.

7. The friction stir welding method according to claim 1, wherein
in the joining step, an overlaying portion formed by laying the joined members one on top of the other is joined, and
a position of a distal end of the rotating tool in the second movement route is lower than the overlaying portion.

8. The friction stir welding method according to claim 1, wherein
the joined members include a first joined member that has an opening portion and a second joined member that seals the opening portion,
the first joined member has
a bottom part,
a peripheral wall part rising from the bottom part and including the opening portion,
a first step portion having a first step bottom surface and a first step side surface rising from the first step bottom surface, and provided at an inner peripheral edge of an end surface of the peripheral wall part, and
a first bottom surface continuous with the first step bottom surface and present at substantially a same height position as the first step bottom surface,
the friction stir welding method further comprises a placement step of placing the second joined member on the first step bottom surface and the first bottom surface to lay the first bottom surface and a back surface of the second joined member one on top of the other, thereby forming an overlaying portion, and also to butt the first step side surface and a side surface of the second joined member against each other, thereby forming a first butting portion,
the joining step involves
the first movement route along which the rotating tool is moved to friction-stir at least the second joined member at the overlaying portion and thereby form a plasticized region,
a third movement route along which the rotating tool is moved to friction-stir the first joined member and the second joined member at the first butting portion, and
the second movement route along which the rotating tool is moved in a state where the rotating tool is inserted from the same side as in the first movement route to friction-stir the first joined member and the second joined member at the overlaying portion and thereby plastically re-fluidize a portion of the plasticized region formed in the first movement route, and
the joining step includes moving the rotating tool along the first movement route, the third movement route, and the second movement route in this order to thereby join the first joined member and the second joined member to each other.

9. The friction stir welding method according to claim 8, wherein in the joining step, the rotating tool contacts only the second joined member during joining in the first movement route.

10. The friction stir welding method according to claim 8, wherein in the joining step,
a position of a distal end of the rotating tool is at a same height as the first step bottom surface in the third movement route, and
the position of the distal end of the rotating tool is lower than the first bottom surface in the second movement route.

11. The friction stir welding method according to claim 8, wherein
the first joined member has
a second step portion having a second step bottom surface continuous with the first step bottom surface and present at substantially a same height position as the first step bottom surface, and a second step side surface rising from the second step bottom surface, and
a third step portion having a third step bottom surface continuous with the first step bottom surface and present at substantially a same height position as the first step bottom surface, and a third step side surface rising from the third step bottom surface,
in the placement step, the second joined member is placed on the first step bottom surface, the second step bottom surface, the third step bottom surface, and the first bottom surface to but the second step side surface and a side surface of the second joined member against each other, thereby forming a second butting portion, and also to butt the third step side surface and a side surface of the second joined member against each other, thereby forming a third butting portion,
the joining step involves
a fourth movement route along which the rotating tool is moved to friction-stir the first joined member and the second joined member at the second butting portion, and
a fifth movement route along which the rotating tool is moved to friction-stir the first joined member and the second joined member at the third butting portion, and
the joining step includes moving the rotating tool along the fourth movement route, the first movement route, the third movement route, the second movement route, and the fifth movement route in this order to thereby join the first joined member and the second joined member to each other.

12. The friction stir welding method according to claim 11, wherein in the joining step,
a position of a distal end of the rotating tool is at a same height as the first step bottom surface in the third movement route,
the position of the distal end of the rotating tool is at a same height as the second step bottom surface in the fourth movement route,
the position of the distal end of the rotating tool is at a same height as the third step bottom surface in the fifth movement route, and
the position of the distal end of the rotating tool is lower than the first bottom surface in the second movement route.

13. The friction stir welding method according to claim 11, wherein when the rotating tool moves from the fourth movement route to the first movement route, an insertion depth of the rotating tool is made shorter while the rotating tool is moved.

14. The friction stir welding method according to claim 8, wherein a thickness of the second joined member is made greater than a height dimension of the first step side surface.

15. The friction stir welding method according to claim 8, wherein in the third movement route, friction stir welding is performed on the first joined member and the second joined member with a rotation axis of the rotating tool slightly shifted toward the second joined member from the first butting portion.

16. The friction stir welding method according to claim 15, wherein
the first joined member is formed of a first aluminum alloy, and the second joined member is formed of a second aluminum alloy, and
the first aluminum alloy is a kind of material with a higher hardness than the second aluminum alloy.

17. The friction stir welding method according to claim 1, wherein
the rotating tool includes a shoulder part and a stirring pin extending downward from a center of a lower end surface of the shoulder part, and
in the joining step, friction stir welding is performed with the lower end surface of the shoulder part in contact with front surfaces of the joined members.

18. The friction stir welding method according to claim 1, wherein
the rotating tool includes a base part and a stirring pin extending downward from a center of a lower end surface of the base part, and
in the joining step, friction stir welding is performed with the base part separated from the joined members and with only the stirring pin in contact with the joined members.

19. The friction stir welding method according to claim 1, wherein
the rotating tool has
a base part, and
a stirring pin provided on the base part,
the stirring pin includes
a proximal end-side pin continuous with the base part, and
a distal end-side pin continuous with the proximal end-side pin,
a taper angle of the proximal end-side pin is larger than a taper angle of the distal end-side pin, and a staircase-shaped pin step portion is formed in an outer peripheral surface of the proximal end-side pin, and
in the joining step, friction stir welding is performed with the outer peripheral surface of the proximal end-side pin in contact with front surfaces of the joined members.
